(19) Europäisches Patentamt
European Patent Office
Office européen des brevets

(11) **EP 3 152 533 B1**

(12) **EUROPÄISCHE PATENTSCHRIFT**

(45) Veröffentlichungstag und Bekanntmachung des Hinweises auf die Patenterteilung:
**05.12.2018 Patentblatt 2018/49**

(51) Int Cl.:
***G01F 25/00*** *(2006.01)*

(21) Anmeldenummer: **15716049.0**

(22) Anmeldetag: **14.04.2015**

(86) Internationale Anmeldenummer:
**PCT/EP2015/058088**

(87) Internationale Veröffentlichungsnummer:
**WO 2015/185254 (10.12.2015 Gazette 2015/49)**

(54) **VERFAHREN ZUM KALIBRIEREN VON DURCHFLUSSMESSERN FÜR FLUIDE MEDIEN**

PROCESS FOR CALIBRATING FLOW METERS

PROCÉDÉ DE CALIBRAGE DES DÉBIMÈTRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.06.2014 DE 102014210545**

(43) Veröffentlichungstag der Anmeldung:
**12.04.2017 Patentblatt 2017/15**

(73) Patentinhaber: **Robert Bosch GmbH**
**70442 Stuttgart (DE)**

(72) Erfinder: **WEINDL, Karl**
**71332 Waiblingen (DE)**

(56) Entgegenhaltungen:
WO-A1-02/097379    WO-A1-2013/056235
DE-B3-102008 008 427    US-A- 4 107 984
US-A1- 2003 225 538    US-A1- 2007 028 663
US-B1- 6 453 721

- **WEAGER B: "NAMAS-APPROVED FLOWMETERING", MEASUREMENT AND CONTROL, INSTITUTE OF MEASUREMENT AND CONTROL. LONDON, GB, Bd. 26, Nr. 10, 1. Dezember 1993 (1993-12-01), Seiten 298-301, XP000423902, ISSN: 0020-2940**
- **BOUCHER R F ET AL: "Low Reynolds number fluidic flowmetering", JOURNAL OF PHYSICS E. SCIENTIFIC INSTRUMENTS, IOP PUBLISHING, BRISTOL, GB, Bd. 21, Nr. 10, 1. Oktober 1988 (1988-10-01), Seiten 977-989, XP020018645, ISSN: 0022-3735, DOI: 10.1088/0022-3735/21/10/015**

## Beschreibung

Die Erfindung betrifft ein Verfahren zum Kalibrieren von Durchflussmessern für fluide Medien und eine Kalibriervorrichtung, die insbesondere zur Durchführung eines derartigen Verfahrens geeignet ist.

Stand der Technik

Durchflussmesser dienen zum Bestimmen der Durchflussmenge eines fluiden Mediums, wie zum Beispiel Dieselöl, und werden typischerweise mittels eines definierten Volumenstroms abgeglichen bzw. kalibriert. Gleichwohl ergeben sich bei den herkömmlichen Kalibrierverfahren Messfehler bzw. Messunsicherheiten, die im Wesentlichen darauf zurückzuführen sind, dass bei höheren Temperaturen auftretende physikalische Effekte unterschiedlicher Art nicht berücksichtigt sind. So erfolgt bei Erwärmung des fluiden Mediums eine zunehmende Messwertstreuung bei einem derartigen Durchflussmesser durch die dann infolge der Erwärmung einsetzende Vermischung von Gasbläschen und Fluid und des damit einhergehenden ansteigenden Systemdrucks, wobei bei steigender Fluid-Temperatur die Viskosität des fluiden Mediums abnimmt, was zu einem sukzessive abnehmenden Reibungswiderstand des fluiden Mediums an Oberflächen von mechanisch bewegten Komponenten eines derartigen Durchflussmessers führt. Dadurch sind insbesondere bei höheren Temperaturen solche Durchflussmesser nicht mehr zuverlässig einsetzbar, da die geforderten Toleranzen aufgrund eines systematischen Abdriftens der Durchflussmesswerte des Durchflussmessers überschritten werden. Dergleichen Messabweichungen sind jedoch mit herkömmlichen Kalibrierverfahren nicht erfassbar, da die gültigen Kalibrierungsnormvorschriften zur Durchführung von Kalibrierungen lediglich eine Kalibriertemperatur von 40 °C vorschreiben.

Aus der DE 10 2008 008 427 B3 ist eine Kalibriervorrichtung zum Kalibrieren eines Gasflussmessers mit einem Referenzflussmesser bekannt. Dabei wird ein gewünschter Gasfluss eingestellt und ein genaues, druckstabiles und temperaturstabiles Kalibrieren des Gasflussmessers erreicht. Es wird eine gewünschte Stärke des Gasflusses eingestellt und die Größe des momentanen Gasflusses durch den Referenzflussmesser erfasst. Außerdem wird ein gewünschter Druck des Messgases eingestellt. Der am Gasflussmesser angezeigte Wert kann mit dem am Referenzflussmesser angezeigten Wert verglichen und daraus ein Korrekturwert abgeleitet werden.

Vorteile der Erfindung

Das Verfahren mit den Merkmalen des Patentanspruchs 1 hat den Vorteil, dass Durchflussmesser über einen weiten Temperaturbereich von fluiden Medien mit hoher Genauigkeit kalibriert werden können. Weitere vorteilhafte Weiterbildungen und Ausgestaltungen der Erfindung ergeber sich durch die in den Unteransprüchen 2 bis 7 aufgeführten Maßnahmen. Eine Ausgestaltung des erfindungsgemäßen Verfahrens kann darin bestehen, dass das fluide Medium auf die voreingestellte Temperatur vor dessen Eintritt in die Prüfmessstrecke erwärmt wird, wobei die Temperatur während einer laufenden Messreihe innerhalb der Prüfmessstrecke konstant gehalten wird. Dadurch kann ein Referenz-Durchflussmesser, der von einem fluiden Medium im "kalten" Zustand durchströmt wird, mit einem in der Prüfmessstrecke zu kalibrierenden Durchflussmesser, der von dem fluiden Medium im "heißen" Zustand durchströmt wird, verglichen werden. Dies ist insbesondere dann vorteilhaft, wenn für den zu kalibrierenden Durchflussmesser ein Einsatz bzw. Betrieb bei wechselnden Medientemperaturen geplant ist und somit der Temperatureinsatzbereich zu bestimmen ist. Eine andere Ausgestaltung des erfindungsgemäßen Verfahrens kann darin bestehen, dass das fluide Medium vor Eintritt in die Referenzmessstrecke auf die vorbestimmte Temperatur erwärmt wird, wobei die Medientemperatur während einer laufenden Messreihe innerhalb der Referenzmessstrecke und Prüfmessstrecke konstant gehalten wird. Bei dieser sog. "Heißkalibrierung" durchströmt das auf eine vorbestimmte Temperatur erwärmte bzw. erhitzte Medium sowohl die Referenzmessstrecke wie auch die Prüfmessstrecke, so dass ein Referenz-Durchflussmesser mit einem zu kalibrierenden Durchflussmesser unter isothermen Bedingungen, d.h. bei gleicher Medientemperatur in beiden Messstrecken, verglichen wird.

Eine besonders vorteilhafte verfahrenstechnische Variante, mit welcher eine hochpräzise Kalibrierung erzielt werden kann, sieht vor, dass zum Erfassen einer gesamten Durchflussmenge ein während eines Messvorgangs bzw. einer Messreihe durch die Referenzmessstrecke und die Prüfmessstrecke durchgeströmtes Volumen des fluiden Mediums durch Wiegen bestimmt wird.

Gemäß einer Verfahrensvariante wird der Korrekturwert für eine vorbestimmte Medientemperatur T bei einer vorgegebenen Viskosität des Mediums anhand der nachstehenden Gleichung ermittelt: $k_T = Q_{Soll} - Q$, wobei mit $Q_{Soll}$ eine Sollwert-Durchflussmenge und mit Q der Mittelwert von mehreren zeitlich aufeinanderfolgend mittels des zu kalibrierenden Durchflussmessers erfassten Durchflussmengenmesswerten bezeichnet sind.

Gemäß einer anderen Verfahrensvariante, die dann zum Einsatz kommt, wenn das während eines Messvorgangs bzw. einer Messreihe durch die Messstrecken durchströmende Medium zusätzlich gewogen wird, lässt sich aufgrund des zusätzlichen Wiegens ein deutlich präziserer Korrekturwert erzielen, der für eine vorbestimmte Medientemperatur T anhand der nachstehenden Gleichung ermittelt wird: $k_T = Q_{Soll} - Q_{Master} - Q_{Waage} + O_{Kal}$, wobei mit $Q_{Soll}$ das zu messende Durchflussvolumen, mit $Q_{Master}$ der jeweilige Mittelwert des in der Referenzmessstrecke ermittelten Durchflussvolumens, mit $Q_{Waage}$ der jeweilige Mittelwert des durch Wiegen gemessenen Durchflussvolumens, mit $Q_{Kal}$ das mittlere Durchflussvolumen in der Prüfmessstrecke und mit $k_T$ der Korrekturwert bei einem Durchfluss eines vorbestimmten Durchflussvolumens bezeichnet sind.

Auf der Basis des ermittelten Korrekturwerts $k_T$ kann eine Messunsicherheit für den zu kalibrierenden Durchflussmesser anhand der nachfolgenden Gleichung ermittelt werden:

$$\pm u = 0.5 * \sqrt{{k_T}^2 + \sum_{j=1}^{l} c_j^2} \, ,$$

wobei mit $\pm u$ die Messunsicherheit und mit $k_T$ der Korrekturwert bei einer vorbestimmten Medientemperatur T bezeichnet sind, während mit den Variablen $c_j$ systematische Messabweichungen unterschiedlichen Ursprungs bezeichnet sind, um beispielsweise mittels einer der Variablen die sich beim Vergleichen von Messungen in der Referenzmessstrecke und der Prüfmessstrecke ergebende Vergleichsstellendifferenz oder mittels einer anderen Variablen messtechnische Streuungen z.B. aufgrund von Druckschwankungen oder Regelungsschwingungen zu berücksichtigen. Dabei sind mit $j$ der Laufindex bei der Summation der einzelnen Variablen und mit I die Anzahl der zu berücksichtigenden Variablen bezeichnet.

In vorrichtungstechnischer Hinsicht weist eine erfindungsgemäße Kalibriervorrichtung die Merkmale des unabhängigen Patentanspruchs 8 auf.

Weitere vorteilhafte Weiterbildungen und Ausgestaltungen der Erfindung ergeben sich durch die in den Unteransprüchen 9 bis 21 aufgeführten Vorrichtungsmerkmale.

Um in der Prüfmessstrecke eine Heißkalibrierung eines Durchflussmessers durchführen zu können, sind in Strömungsrichtung zwischen der Referenzmessstrecke und der nachgeordneten Prüfmessstrecke Mittel zum Erwärmen des fluiden Mediums angeordnet, die wenigstens einen Wärmetauscher und ein zugeordnetes Temperiergerät aufweisen.

Eine besonders vorteilhafte Weiterbildung der Erfindung, mit welcher eine äußerst präzise Kalibrierung erzielbar ist, kann darin bestehen, dass der Prüfmessstrecke in Strömungsrichtung des fluiden Mediums Mittel zum Wiegen der während einer Messreihe durch die Referenzmessstrecke und die Prüfmessstrecke durchgeflossenen Durchflussmenge nachgeordnet sind. Dabei umfassen die Mittel zum Wiegen einen Wiegebehälter zum Aufnehmen des aus der Prüfmessstrecke austretenden Mediums, wobei der Wiegebehälter über wenigstens eine Leitung mit einem Ausgang der Prüfmessstrecke fluidisch koppelbar ist und der Wiegebehälter wenigstens eine Wiegemesszelle aufweist, welche zum Wiegen des im Wiegebehälter aufgenommenen Mediums dient. Um den Strömungszweig nach Bedarf in den Strömungspfad gezielt einkoppeln oder aus dem Strömungspfad auskoppeln zu können, ist wenigstens ein Schaltventil vorgesehen, welches dem Ausgang der Prüfmessstrecke abströmseitig nachgeordnet ist, um in einer ersten Ventilschaltstellung das aus der Prüfmessstrecke austretende Medium in den Wiegebehälter zu leiten und in einer zweiten Ventilschaltstellung das Medium stattdessen in einen Vorratstank zurückzuführen. Zur Steuerung des wenigstens einen Schaltventils sind Steuerungsmittel vorgesehen, deren Funktion vorteilhaft von der oben erwähnten Rechnereinheit ausgeübt werden kann.

Gemäß einer zweckmäßigen Ausgestaltung der Erfindung sind in der Referenzmessstrecke und in der Prüfmessstrecke jeweils Sensoren angeordnet, um physikalische Messgrößen des fluiden Mediums zumindest anhand von Druck, Temperatur, Viskosität zu erfassen. Mit den Sensoren werden Druck, Temperatur und Viskosität des Mediums in den beiden Messstrecken laufend überwacht, um stabile Randbedingungen als Voraussetzung für die Kalibrierung herzustellen bzw. einzuregeln. Indem wenigstens ein Viskositätssensor vorgesehen ist, ist es möglich, einen Durchflussmesser für fluide Medien unterschiedlicher Viskosität zu kalibrieren oder nachzukalibrieren oder eine Änderung der Viskosität des durch die Messstrecke(n) fließenden Mediums bei verschiedenen Medientemperaturen zu erfassen.

Eine besonders vorteilhafte Weiterbildung der Erfindung kann darin bestehen, dass sowohl in der Referenzmessstrecke als auch in der Prüfmessstrecke jeweils wenigstens ein Strömungsgleichrichter vorgesehen ist, um weitgehend laminare, d.h. turbulenzarme, Strömungsverhältnisse in beiden Messstrecken herzustellen. Das durch die Messstrecken gepumpte Medium gelangt dann entweder auf direktem Wege oder über Umwege wie beispielsweise über den Wiegebehälter zurück in den Vorratstank.

Damit die Kalibriervorrichtung als geschlossenes Kreislaufsystem arbeiten kann, sind ein Vorratstank zur Aufnahme des fluiden Mediums und wenigstens eine Pumpe vorgesehen, die während des Kalibrierbetriebs das fluide Medium durch die Referenzmessstrecke und die in Strömungsrichtung nachgeordnete Prüfmessstrecke fördert. Das durch die beiden Messstrecken durchströmende Medium kann dann entweder direkt oder über Umwege wie z.B. über den Wiegebehälter zurück in den Vorratstank gelangen.

Eine besonders genaue Referenz-Sollwertvorgabe der Durchflussmenge lässt sich erzielen, indem in der Referenzmessstrecke wenigstens zwei Durchflussmesser in Strömungsrichtung hintereinander angeordnet sind.

Eine abgewandelte Ausführungsform der Kalibriervorrichtung, bei welcher die beiden Durchflussmesser in der Referenzmessstrecke entfallen können und gleichwohl eine hohe Präzision der Sollwertvorgabe der Durchflussmenge erzielbar ist, kann darin bestehen, dass die Referenzmessstrecke einen in einem Zylinder verschieblich aufgenommenen Arbeitskolben aufweist, welcher dazu dient, bei Ausführung seines Arbeitshubs einen konstant gleichmäßigen Volumenstrom des fluiden Mediums in der Referenzmessstrecke zu erzeugen. Vorteilhaft können dadurch Druckpulsationen, die beispielsweise von einer Pumpe verursacht werden können, während der Dauer eines Arbeitshubs des Arbeitskolbens kompensiert werden.

Um zum Kalibrieren einen Durchflussmesser rasch ein- oder auswechseln zu können, ohne die Kalibriervorrichtung entleeren oder gänzlich deaktivieren zu müssen, kann eine vorteilhafte Weiterbildung der erfindungsgemäßen Kalibriervorrichtung darin bestehen, dass zwischen Referenzmessstrecke und Prüfmessstrecke wenigstens ein Schaltventil angeordnet ist, das in einer ersten Ventilschaltstellung die Referenzmessstrecke mit der Prüfmessstrecke fluidisch verbindet und in einer zweiten Ventilschaltstellung die Prüfmessstrecke von der Referenzmessstrecke fluidisch abtrennt. Dadurch ist es möglich, während eines Wechselvorgangs das fluide Medium anstatt über die Prüfmessstrecke über einen anderen Strömungspfad zu leiten, der als Bypass-Leitung dient. Zur Steuerung des wenigstens einen Schaltventils werden Steuerungsmittel eingesetzt, deren Funktion vorteilhaft von der oben erwähnten Rechnereinheit ausgeübt werden kann.

Eine mobil einsetzbare Ausführungsform der Kalibriervorrichtung besteht darin, dass die Referenzmessstrecke als mobile Baugruppe ausgebildet ist, die mit einer Kalibrierung anhand zumindest eines Kalibrier-Datensatzes versehen ist, wobei der zumindest eine Kalibrier-Datensatz wenigstens einen Korrekturfaktor zur Referenzfunktion der Baugruppe bereitstellt. Die Baugruppe wird typischerweise als Teil einer stationären Kalibriervorrichtung, innerhalb welcher die Baugruppe zunächst die Prüfmessstrecke bildet, mittels der Referenzmessstrecke der stationären Kalibriervorrichtung kalibriert, um nach dieser Kalibrierung in ihrer neuen Funktion als mobil verwendbare Referenz für einen zu kalibrierenden Durchflussmesser bzw. Prüfling zu dienen. Dazu wirkt die Baugruppe mit dem ihr zugeordneten wenigstens einen Kalibrier-Datensatz funktional zusammen und ist dadurch örtlich flexibel einsetzbar.

Zeichnungen

Ausführungsbeispiele der Erfindung sind in der nachfolgenden Beschreibung und in den beigefügten Zeichnungen näher erläutert. Letztere zeigen in schematisch gehaltenen Ansichten:

Fig. 1 eine Kalibriervorrichtung gemäß einer ersten Ausführungsform,

Fig. 2 die Kalibriervorrichtung gemäß einer zweiten Ausführungsform,

Fig. 3 ein Detail der Vorrichtung von Fig. 2,

Fig. 4 die Kalibriervorrichtung gemäß einer dritten Ausführungsform, welche für den mobilen Einsatz vorgesehen ist,

Fig. 5 ein Flussdiagramm mit den wesentlichen Verfahrensschritten eines Hauptprogramms zur Steuerung der Kalibriervorrichtung,

Fig. 6 ein Flussdiagramm mit den wesentlichen Verfahrensschritten eines von dem Hauptprogramm gemäß Fig. 5 aufrufbaren Unterprogramms zur Durchführung einer Standardprozedur,

Fig. 7 ein Flussdiagramm mit den wesentlichen Verfahrensschritten eines von dem Hauptprogramm gemäß Fig. 5 aufrufbaren Unterprogramms zur Durchführung einer Applikationsprozedur,

Fig. 8 ein Flussdiagramm mit den wesentlichen Verfahrensschritten eines von dem Hauptprogramm gemäß Fig. 5 aufrufbaren Unterprogramms zur Durchführung einer Korrekturprozedur, und

Fig. 9 ein Flussdiagramm mit den wesentlichen Verfahrensschritten eines von dem Hauptprogramm gemäß Fig. 5 aufrufbaren Unterprogramms zur Durchführung einer Prozedur zur Masse-Bestimmung einer Durchflussmenge.

Beschreibung der Ausführungsformen

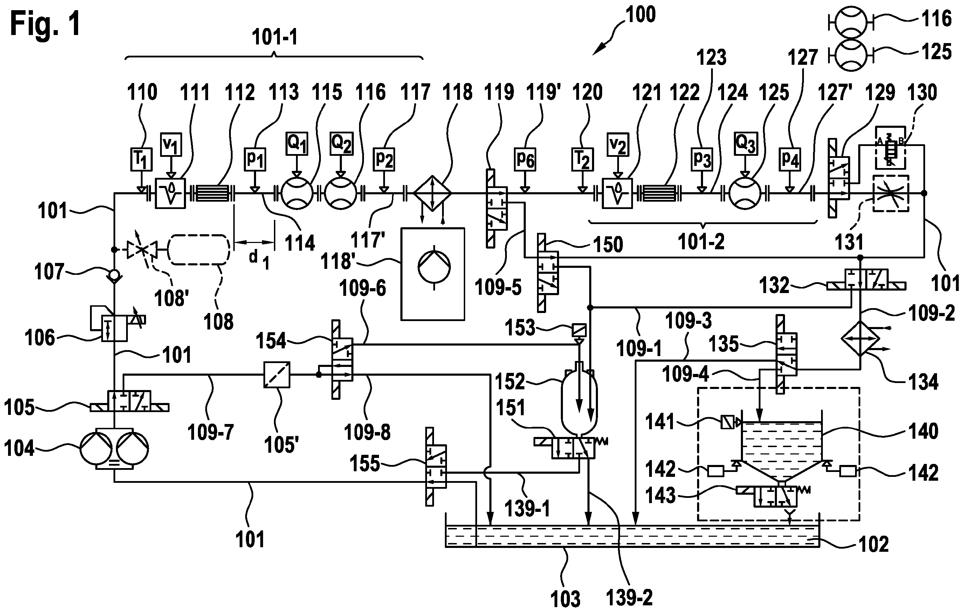

Fig. 1 zeigt in einer schematischen Ansicht eine erste Ausführungsform einer Kalibriervorrichtung 100, welche zum Kalibrieren eines Durchflussmessers 125 dient und zum stationären Mess- und Kalibrierbetrieb geeignet ist. Dabei wird zum Kalibrieren des entsprechenden Durchflussmessers bzw. Durchlaufmessers 125 ein fluides Medium 102 wie Dieselöl verwendet, das in einem Vorratstank 103 vorzugsweise bei Raumtemperatur gespeichert ist. Die Vorrichtung 100 arbeitet in einem geschlossenen Kreislauf, in welchem der Vorratstank 103 als Anfangs- und Endpunkt für das durch eine Hauptleitung 101 der Vorrichtung 100 strömende fluide Medium 102 fungiert. Eine Pumpe 104, die vorzugsweise als Dualpumpe ausgebildet ist, pumpt das Medium 102 über eine Leitung 101 aus dem Vorratstank 103 und führt das Medium 102 druckstabilisiert einer Referenzmessstrecke 101-1 der Leitung 101 zu. Dazu sind in der Leitung 101 der Pumpe 104 hintereinander ein Umlaufventil 105, ein Drosselventil 106 und ein Rückschlagventil 107 nachgeordnet. An den vom Rückschlagventil 107 abströmseitig wegführenden Teil der Leitung 101 ist zur Pulsregelung der Strömung eine Drossel 108' mit anhängender Membran 108 angekoppelt. Nach Passieren der drei Ventile 105, 106, 107 strömt das Medium 102 an der Drossel 108' mit anhängender Membran 108 vorbei und in einen als Referenzmessstrecke dienenden Leitungsabschnitt 101-1, in dem hintereinander eine Temperaturmessstelle 110 zum Erfassen der Temperatur des zuströmenden Mediums 102, ein Viskositätssensor 111, ein Strömungsgleichrichter 112, eine Druckmessstelle 113, eine erste Durchflussmessstelle 115, eine zweite Durchflussmessstelle 116, und eine Ausgangsdruckmessstelle 117 angeordnet sind. Der Drucksensor 113 ist in einer Zulaufstrecke 114 angeordnet, welche sich zwischen dem Strömungsgleichrichter 112 und der ersten Durchflussmessstelle 115 erstreckt und eine Länge $d_1$ aufweist, die mindestens 200 mm beträgt. Der zweite Drucksensor 117 ist in einer Auslaufstrecke 117' angeordnet, die sich abströmseitig an die zweite Durchflussmessstelle 116 fluidisch anschließt. Der Strömungsgleichrichter 112 ist dazu vorgesehen, eine turbulente Strömung weitgehend zu vermeiden. In der Referenzmessstrecke 101-1 wird vor dem als Referenzmesser 115 fungierenden Durchflussmesser 115 die Viskosität des fluiden Mediums 102 bestimmt und dessen Temperatur und Eingangsdruck mittels der Temperaturmessstelle 110 und des Drucksensors 113 gemessen. Der zweite Durchflussmesser 116 ist zum Linearisieren der in der Referenzmessstrecke 101-1 gewonnenen Durchflussmesswerte vorgesehen.

Nach Passieren der Referenzmessstrecke 101-1 durchströmt das Medium 102 einen Wärmetauscher 118, welcher im Zusammenspiel mit einem Temperiergerät 118' dazu dient, das fluide Medium 102 auf eine vorbestimmte Temperatur zu erwärmen. Danach gelangt das Medium 102 über ein Leerlaufventil 119 in einen als Prüfmessstrecke dienenden Leitungsabschnitt 101-2. Die Prüfmessstrecke 101-2 ist im Wesentlichen ähnlich aufgebaut wie die Referenzmessstrecke 101-1. In der Prüfmessstrecke 101-2 sind in Strömungsrichtung hintereinander eine Temperaturmessstelle 120 zum Erfassen der Eingangstemperatur des zuströmenden Mediums 102, ein Viskositätssensor 121, ein Strömungsgleichrichter 122, eine Druckmessstelle 123, ein zu kalibrierender Durchflussmesser bzw. Prüfling 125, und eine Ausgangsdruckmessstelle 127 angeordnet. Dabei ist die Druckmessstelle 123 in einer Zulaufstrecke 124 angeordnet, welche sich zwischen dem Strömungsgleichrichter 122 und dem zu kalibrierenden Durchflussmesser 125 erstreckt. Die Ausgangsdruckmessstelle 127 ist in einer Auslaufstrecke 127' angeordnet, welche sich abströmseitig an den zu kalibrierenden Durchflussmesser 125 anschließt. Der Strömungsgleichrichter 122 dient dazu, eine turbulente Strömung in der Prüfmessstrecke 101-2 weitgehend zu vermeiden. Danach gelangt das Medium 102 zu einem der Auslaufstrecke 127' nachgeordneten Schaltventil 129, welches als 4/2-Mehrwegeventil ausgebildet ist und in einer ersten Ventilschaltstellung bzw. Ruhestellung die Auslaufstrecke 127' mit einem zum Einstellen eines konstanten Drucks dienenden Drosselventil 131 fluidisch verbindet, wohingegen es in einer zweiten Ventilschaltstellung die Auslaufstrecke 127' mit einem zum Einstellen eines variablen Drucks dienenden Proportionaldrosselventil 130 fluidisch verbindet. Dabei sind die Ausgänge der beiden Drosselventile 130, 131 fluidisch miteinander verbunden und sind gemeinsam über die Leitung 101 zu einem Schaltventil 132 geführt. Da sich das Schaltventil 129 in seiner Ruhestellung befindet, durchströmt das aus der Prüfmessstrecke 101-2 kommende Medium 102 das Drosselventil 131, das den Druck an dieser Stelle konstant hält und gelangt zum Schaltventil 132. In seiner ersten Ventilschaltstellung lässt das Schaltventil 132 das aus der Prüfmessstrecke 101-2 je nach Schaltstellung des Umschaltventils 129 über eines der beiden parallel zueinander angeordneten Drosselventile 130, 131 kommende Medium 102 zu einem Wärmetauscher 134 durch, der über eine Leitung 109-2 zuströmseitig mit dem Ventil 132 und abströmseitig mit einem Ventil 135 fluidisch verbunden ist. Das Ventil 135 lässt in seiner ersten Schaltstellung das vom Wärmetauscher 134 heruntergekühlte Medium 102 durch und über eine Leitung 109-3 zurück in den Vorratstank 103. In seiner zweiten Schaltstellung verbindet das Schaltventil 135 den von dem Wärmetauscher 134 abströmseitig wegführenden Teil der Leitung 109-2 mit einer Leitung 109-4, welche in einen Wiegebehälter 140 mit einem Füllstandmesser 141 und zwei Wiegezellen 142 führt, so dass das in den Wiegebehälter 140 strömende Medium 102 mittels des Füllstandmessers 141 und der zwei Wiegezellen 142 messbar ist. Ein zwischen Ausgang des Wiegebehälter 140 und dem Vorratstank 103 angeordnetes Schaltventil 143 sperrt in einer Sperrstellung den Ausgang des Wiegebehälters 140 oder gibt in Durchlassstellung den Ausgang des Wiegebehälters 140 zum Eingang des Vorratstanks 103 frei. In einer zweiten Schaltstellung des Schaltventils 132 wird die Leitung 109-2 zum Wiegebehälter 140 gesperrt und eine zu einem Eingang eines Kreislaufbehälters 152 führende Leitung 109-1 freigegeben, so dass das aus der Prüfmessstrecke 101-2 über eines der Drosselventile 130 oder 131 kommende und anschließend durch das Schaltventil 132 austretende Medium 102 über die Leitung 109-1 in den Kreislaufbehälter 142 gelangt. Ein abströmseitig an den Ausgang des Kreislaufbehälters 152 angeschlossenes Schaltventil 151 verbindet in seiner ersten Schaltstellung den Ausgang des Kreislaufbehälters 152 mit einer in den Vorratstank 103 führenden Leitung 139-2, so dass das im Kreislaufbehälter 152 angesammelte Medium 102 in den Vorratstank 103 abfließen kann. In der zweiten Schaltstellung des Schaltventils 151 ist die Leitung 139-2 abgesperrt und der Ausgang des Kreislaufbehälters 152 mit einer Leitung 139-1 verbunden, die zu einem Schaltventil 155 führt. In einer ersten Schaltstellung des Schaltventils 155 ist die Pumpe 104 über die Leitung 101 mit dem Vorratstank 103 verbunden, so dass die Pumpe 104 das Medium 102 aus dem Vorratstank 103 ansaugen kann; demgegenüber ist in der zweiten Schaltstellung des Schaltventils 155 der Leitungsabschnitt 139-1 mit dem zur Pumpe 104 führenden Teil der Leitung 101 verbunden und somit kann die Pumpe 104, anstatt das Medium 102 aus dem Vorratstank 103 herauszufördern, aus dem Kreislaufbehälter 152 kommendes Medium ansaugen und weiter zur Referenzmessstrecke 101-1 und Prüfmessstrecke 101-2 pumpen; diese Schaltkonfiguration der Vorrichtung 100 wird aus Sicherheitsgründen gewählt, wenn die Vorrichtung 100 bei höheren Temperaturen, wie z.B. bei etwa 120 °C und darüber, betrieben wird und dazu der Kreislaufbehälter 152 als geschlossener Tank für das Medium 102 erforderlich ist.

Der Kreislaufbehälter 152 weist einen zweiten Eingang auf, der mit einem Füllstandsmesser 153 versehen ist; über den zweiten Eingang kann der Kreislaufbehälter 152 auch ohne Zwischenschaltung der Referenzmessstrecke 101-1 und Prüfmessstrecke 101-2 mit dem Medium 102 aus dem Vorratstank 103 befüllt bzw. nachgefüllt werden. Dazu wird das der Pumpe 104 in der Leitung 101 nachgeordnete Schaltventil 105, das in seiner ersten Ventilschaltstellung die Leitung 101 zum Drosselventil 106 in Richtung der Referenzmessstrecke 101-1 freigibt, in seine zweite Ventilschaltstellung umgeschaltet, in welcher die Leitung 101 zum Drosselventil 106 und somit zur Referenzmessstrecke 101-1 und Prüfmessstrecke 101-2 gesperrt ist, wobei gleichzeitig ein Leitungsabschnitt 109-7 geöffnet wird, der über eine Filtereinheit 105' zum Schaltventil 154 führt. In seiner ersten Ventilschaltstellung verbindet das Schaltventil 154 den Leitungsabschnitt 109-7 mit einem Leitungsabschnitt 109-8, welcher direkt in den Vorratstank 103 führt, so dass das von der Pumpe 104 aus dem Vorratstank 103 angesaugte Medium 102 gefiltert zurück in den Vorratstank 103 fließen kann, während es demgegenüber in seiner zweiten Ventilschaltstellung den Leitungsabschnitt 109-7 mit einem Leitungsabschnitt 109-6 verbindet, der zum zweiten Eingang des Kreislaufbehälters 152 führt und mithin das von der Pumpe 104 aus dem Vorratstank 103 angesaugte Medium 102 gefiltert in den Kreislaufbehälter 152 gelangen kann. Dabei wird die Befüllung bzw. Nachfüllung des Kreislaufbehälters 152 mittels des Füllstandsmelders 153 kontrolliert.

Zum Ein- bzw. Auswechseln eines zu kalibrierenden Durchflussmessers 125 wird das zwischen Referenzmessstrecke 101-1 und Prüfmessstrecke 101-2 angeordnete Schaltventil 119 aus seiner ersten Ventilschaltstellung, also Ausgangsstellung, in welcher die Referenzmessstrecke 101-1 mit der Prüfmessstrecke 101-2 fluidisch gekoppelt ist, in seine zweite Ventilschaltstellung umgeschaltet, in welcher die Prüfmessstrecke 101-2 von der Referenzmessstrecke 101-1 fluidisch abtrennt ist, damit die Prüfmessstrecke 101-2 während eines solchen Wechsels von dem Prüfling 125 zu einem anderen Prüfling 126 nicht leer laufen und ein Eindringen von Luft in die Prüfmessstrecke 101-2 vermieden werden kann. Dazu sperrt das Schaltventil 119 in seiner zweiten Ventilschaltstellung einerseits den zur Prüfmessstrecke 101-2 führenden Teil der Leitung 101 und verbindet andererseits das abströmseitige Ende des der Referenzmessstrecke 101-1 nachgeordneten Wärmetauschers 118 mit einem Leitungsabschnitt 109-5, welcher zum Schaltventil 150 führt, das - im Zusammenspiel mit dem Schaltventil 119 - in seine zweite Ventilschaltstellung umgeschaltet wird und dabei den Leitungsabschnitt 109-5 zu einem Eingang des Kreislaufbehälters 152 durchschaltet, so dass das aus der Referenzmessstrecke 101-1 ausströmende Medium während eines Ein- bzw. Auswechselvorgangs in den Kreislaufbehälter 152 abfließen kann.

Die Schaltventile 105, 119, 129, 132, 135, 143, 151, 154 und 155 der in Fig. 1 dargestellten Kalibriervorrichtung 100 sind als 4/2-Wegeventile ausgebildet und sind mit einer in Fig. 1 nicht dargestellten Steuerungseinrichtung elektrisch wirkverbunden, welche die Schaltventile und deren Zusammenspiel und ferner die Drosselventile auf der Basis von Messsignalen steuert, die von den Messstellen 110, 111, 113, 117, 119', 120, 121, 123, 127, 141, 142, 153 an die Steuerungseinrichtung übermittelt werden. Ferner empfängt und verarbeitet die Steuerungseinrichtung von den Durchflussmessern 115, 116, 125 erfasste und übermittelte Durchflussmengenwerte.

In verfahrenstechnischer Hinsicht wird zum Kalibrieren eines Durchflussmessers bzw. Prüflings 125 in der Prüfmessstrecke 101-2 mittels der Pumpe 104 das fluide Medium 102 aus dem Vorratstank 103 entnommen und der Referenzmessstrecke 101-1 druckstabilisiert zugeführt, wobei zusätzlich der Kreislaufbehälter 152 gefüllt wird. Anschließend wird das Schaltventil 132 geschlossen. In der Referenzmessstrecke 101-1 werden vor dem als Referenz fungierenden Durchflussmesser 115 mittels der Messstelle 110 die Temperatur $T_1$ und mittels der Druckmessstelle 113 der Druck $p_1$ gemessen sowie mittels des Viskosimeters 111 die Viskosität des Mediums 102 bei der gemessenen Temperatur $T_1$ bestimmt. Nach Aufheizen des fluiden Mediums 102 mittels des Wärmetauschers 118 und des Temperiergeräts 118' wird in der Prüfmessstrecke 101-2 die Temperatur $T_2$ mittels der Messstelle 120 gemessen, die Viskosität des Mediums 102 mittels des Viskosimeters 121 bei der gemessenen Temperatur $T_2$ bestimmt und der Druck am zu kalibrierenden Durchflussmesser bzw. Prüfling 125 mittels des Proportionaldrosselventils 130 so eingeregelt, dass der mittels der Druckmessstelle 123 erfasste Druck $p_3$ vor dem Durchflussmesser 125 mit dem mittels der Druckmessstelle 127 erfassten Druck $p_4$ übereinstimmt und bis sich stabile Druckverhältnisse zwischen der Referenzmessstrecke und der Prüfmessstrecke 101-2 einstellen. Diese stabilen Druckverhältnisse sind dann vorhanden, wenn der mittels der zwischen Referenz- und Prüfmessstrecke angeordneten Druckmessstelle 119' erfasste Druck $p_6$ mit dem Druck $p_1$ übereinstimmt, welcher

mittels der in der Referenzmessstrecke 101-1 vor dem als Norm arbeitenden Durchflussmesser 115 angeordneten Druckmessstelle 113 erfasst wird. Gilt also $p_3 \cong p_4$ und $p_6 \cong p_1$, so sind stabile Druckverhältnisse vorhanden und die Datenerfassung für die Kalibrierung des Durchflussmessers 125 kann gestartet werden.

Um danach einen optional vorgesehenen Wiegevorgang durchzuführen, wird gemäß einem vorbestimmten Messzyklus das Schaltventil 132 geöffnet und das zum Aktivieren eines Wiegevorgangs vorgesehene Schaltventil 135 so geschaltet, dass das aus der Prüfmessstrecke 101-2 kommende und daraufhin mittels des Wärmetauschers 134 zurückgekühlte Medium 102 zeitgesteuert in den Wiegebehälter 140 gelangt. Danach wird das zum Aktivieren des Wiegevorgangs vorgesehene Schaltventil 135 geschlossen und gegebenenfalls der Kreislaufbehälter 152 mittels des Schaltventils 154 nachgefüllt. Nach einer vorbestimmten Relaxationszeit wird die Füllmenge des Wiegebehälters 140 mittels der Wiegezellen 142 und des Füllstandsmessers 141 gemessen und in einer Kalibriertabelle abgespeichert.

Tabelle 1 unten zeigt exemplarisch eine zum Kalibrieren eines Prüflings 125 dienende Messreihe für einen als Sollwert bestimmten Norm-Durchflussmengenwert von 160.0 Liter/Stunde bei einer Temperatur $T \approx 90$ °C. Dabei sind in den ersten drei Spalten der Tabelle 1 von dem Durchflussmesser 115 erfasste Durchflussmengenwerte $Q_{Master}$ und die zeitgleich dazu korrespondierenden Temperaturmesswerte $T_{Master}$ in °C an der Temperaturmessstelle 110 und Druckmesswerte $p_1$ in bar an der Druckmessstelle 113 für die Referenzmessstrecke 101-1 aufgelistet, während in den übrigen Spalten die einem jeweiligen Durchflussmengenwert $Q_{Master}$ zugeordneten Durchflussmengenwerte $Q_{(1)}$, $Q_{(2)}$, $Q_{(3)}$ bzw. $Q_{(1kor)}$, $Q_{(2kor)}$, $Q_{(3kor)}$ gegenübergestellt sind, welche in der Prüfmessstrecke 101-2 an dem zu kalibrierenden Prüfling 125 gemessen werden. Die vom Durchflussmesser bzw. Prüfling 125 erfassten Messwerte $Q_{(1)}$, $Q_{(2)}$, $Q_{(3)}$ werden innerhalb eines zeitlichen Messfensters schnell aufeinanderfolgend gemessen, um Fluktuationen bzw. Schwankungen innerhalb des voreingestellten Messfensters zu berücksichtigen. Um zudem in den vom Prüfling 125 erfassten Messwerten systematische Messfehler, z.B. messtechnische Artefakte, zu eliminieren, die außerhalb eines vorgegebenen Toleranzbereichs von $\pm 1.5\%$ bezogen auf den Norm-Durchflussmengenwert von 160.0 l/h liegen, werden für jeden Messwert $Q_{(1)}$, $Q_{(2)}$, $Q_{(3)}$ zugehörige Korrekturmesswerte $Q_{(1kor)}$, $Q_{(2kor)}$, $Q_{(3kor)}$ ermittelt, indem außerhalb des Toleranzbereichs liegende Werte unberücksichtigt bleiben. Aus den jeweiligen Messwerten für $Q_{Master}$, $T_{Master}$, p, und $Q_{(1kor)}$, $Q_{(2kor)}$, $Q_{(3kor)}$ wird ein jeweiliger Mittelwert gebildet, wobei aus den Mittelwerten für $Q_{(1kor)}$, $Q_{(2kor)}$, $Q_{(3kor)}$ ein einziger Mittelwert Q gebildet wird, welcher ein Maß für die Abweichung des zu kalibrierenden Prüflings 125 vom Normwert darstellt und für die in der Tabelle 1 exemplarisch aufgeführte Messreihe Q = 158.52 l/h beträgt. Um die genaue Abweichung zu bestimmen, wird ein erster Korrekturwert bzw. Korrekturfaktor $k_1$ für die Referenzmessstrecke 101-1 ermittelt, welcher sich aus der Abweichung des Mittelwerts für $Q_{Master}$, d.h. 160.46 l/h, gegenüber dem Norm-Durchflussmengenwert von 160.0 l/h zu $k_1$ = -0.46 ergibt. Auf dieser Basis wird ein weiterer Korrekturwert bzw. Korrekturfaktor $k_{2,T}$ bestimmt, der sich aufgrund der nachfolgenden Gleichung (1) errechnen lässt:

$$k_{2,T} = Q_{Master} - Q_{Kal} - |k_{1,T}| \qquad \text{Gleichung (1)}$$

Dabei ist mit $Q_{Master}$ der Mittelwert der vom Durchflussmesser 115 erfassten Durchflussmengenmesswerte, mit $Q_{kal}$ das mittlere Durchflussvolumen am Prüfling 125 und mit $|k_{1,T}|$ der Betrag des ersten Korrekturwerts bezeichnet. $Q_{kal}$ entspricht dem sich aus $Q_{(1kor)}$, $Q_{(2kor)}$, $Q_{(3kor)}$ ergebenden Mittelwert in Tabelle 1. Mithin liefert Gleichung (1) für die in Tabelle 1 exemplarisch dargestellte Messreihe einen Korrekturwert $k_{2,T}$, der 1.48 l/h beträgt. Sowohl der Korrekturwert $k_{2,T}$ wie auch der Korrekturwert $k_{1,T}$ können lediglich für die angegebene Messtemperatur T gelten, so dass zum Erstellen einer sich über einen weiten Temperaturverlauf erstreckenden Kalibrierkurve eine Vielzahl von Messreihen bei unterschiedlichen Temperaturen im gewünschten Temperaturbereich erforderlich ist, wobei die bei einer jeweiligen Temperatur ermittelten Korrekturwerte bzw. Korrekturfaktoren als Stützstellen für die Kalibrierkurve dienen. Eine alternative Formulierung von Gleichung (1) ist durch Gleichung (2) darstellbar:

$$k_{2,T} = Q_{Soll} - Q \qquad \text{Gleichung (2)}$$

Dabei ist mit $Q_{Soll}$ ein zu messendes Durchflussvolumen bezeichnet, während Q den Mittelwert der vom Durchflussmesser 115 erfassten Durchflussmengenmesswerte bezeichnet.

Durch die Einführung des Korrekturwerts $k_1$ für die Referenzmessstrecke 101-1 ist es möglich, beim Kalibrieren innerhalb einer Messreihe unterschiedliche Referenzdurchflussmesser zu verwenden, indem für eine Rückrechnung auf eine gemeinsame Datenbasis der jeweils einem Durchflussmesser zugehörige Korrekturwert $k_1$ berücksichtigt wird.

Tabelle 1

| Q_Master | T_Master | p | Q_(1) | Q_(1kor) | Q_(2) | Q_(2kor) | Q_(3) | Q_(3kor) |
|---|---|---|---|---|---|---|---|---|
| 160.1 | 90.0 | 3.05 | 158.8 | 158.8 | 157.8 | 157.8 | 159.9 | 159.9 |
| 160.2 | 90.1 | 3.04 | 159.2 | 159.2 | 158.2 | 158.2 | 158.7 | 158.7 |
| 159.9 | 90.1 | 3.06 | 158.6 | 158.6 | 158.6 | 158.6 | 158.2 | 158.2 |
| 160 | 90.2 | 2.98 | 158.5 | 158.5 | 158.7 | 158.7 | 157.9 | 157.9 |
| 161 | 89.9 | 3.0 | 156.9 | - | 158.2 | 158.2 | 158.5 | 158.5 |
| 160.9 | 89.8 | 3.02 | 158.4 | 158.4 | 157.9 | 157.9 | 156.8 | - |
| 160.7 | 90.0 | 3.04 | 158.6 | 158.6 | 158.0 | 158.0 | 158.1 | 158.1 |
| 160.8 | 90.1 | 3.01 | 159.4 | 159.4 | 158.5 | 158.5 | 158.3 | 158.3 |
| 160.5 | 90.0 | 2.98 | 158.9 | 158.9 | 158.3 | 158.3 | 158.4 | 158.4 |
| 160.5 | 89.9 | 2.99 | 158.7 | 158.7 | 157.9 | 157.9 | 159.1 | 159.1 |
| | | | | | | | | |
| 160.46 | 90.01 | 3.02 | - | 158.79 | - | 158.21 | - | 158.57 |
| | | Q=158.52 | | | | | | |
| | | Korrekturfaktor $k_1$ = -0.46 | | | | | | |
| | | $k_{2,T}$ = 1.48 | | | | | | |

Tabelle 2 zeigt exemplarisch die Abhängigkeit des Korrekturwerts $k_{2,T}$ von der Temperatur des durch die Prüfmessstrecke 101-2 strömenden Mediums und von dessen Durchflussmenge für einen weiten Temperaturbereich 70 °C ≤ T ≤ 100 °C und Durchflussmengenbereich Q mit 70 l/h ≤ Q ≤ 200 l/h. Im Wesentlichen ergibt sich Tabelle 2 aus einer Synthese einer Vielzahl von nach dem Schema von Tabelle 1 erstellten Messwerten für jeweils unterschiedliche Temperaturen des Mediums und jeweils unterschiedliche Durchflussmengen. Mithin bildet Tabelle 2 die Eckpunkte einer Kalibrierkurve bzw. Kalibrierfunktion. Zwischenwerte sind durch Interpolation bestimmbar.

Tabelle 2

| Korrekturwert $k_{2,T}$ | | | | |
|---|---|---|---|---|
| Q (l/h) | T1 = 70°C | T2 = 80 °C | T3 = 90 °C | T4 = 100 °C |
| 40 | | | | |
| 50 | | | | |
| 60 | | | | |
| 70 | 0.96 | 1.10 | 1.26 | |
| 80 | | | | |
| 90 | | | | |
| 100 | | | | |
| 110 | | | | |
| 120 | 1.06 | 1.22 | | |
| 130 | | | | |
| 140 | | | | |
| 150 | 1.12 | | | |
| 160 | 1.16 | 1.28 | 1.48 | 1.58 |
| 170 | | | | |

(fortgesetzt)

| Korrekturwert $k_{2,T}$ | | | | |
|---|---|---|---|---|
| Q (l/h) | T1 = 70°C | T2 = 80 °C | T3 = 90 °C | T4 = 100 °C |
| 180 | | | | |
| 190 | | | | |
| 200 | 1.14 | 1.30 | 1.54 | |
| 210 | | | | |
| 220 | | | | |
| 230 | | | | |

Tabelle 3 zeigt zur Ermittlung eines Korrekturwerts bzw. Korrekturfaktors $k_3$ exemplarisch eine - analog Tabelle 1 - zum Kalibrieren eines Prüflings 125 dienende Messreihe für einen als Sollwert bestimmten Norm-Durchflussmengenwert von 160.0 Liter/Stunde bei einer Temperatur $T \approx 90$ °C und einem Systemdruck von 3 bar. Dabei dient der Korrekturfaktor $k_3$ zu einer - im Unterschied zu Tabelle 1 in Verbindung mit Gleichung (2) bzw. (3) - noch genaueren Bestimmung des Durchflussvolumens und berücksichtigt dazu eine zusätzliche Messung der während eines Kalibriervorgangs durch die Referenz- und Prüfmessstrecke durchgegangenen Durchflussmenge mittels des Wiegebehälters 140 bei einer Entnahmezeit von 15 sec. In den ersten drei Spalten der Tabelle 1 sind von dem Durchflussmesser 115 erfasste Durchflussmengenwerte $Q_{Master}$ und die zeitgleich dazu korrespondierenden Temperaturmesswerte $T_{Master}$ in °C an der Temperaturmessstelle 110 und Druckmesswerte $p_1$ in bar an der Druckmessstelle 113 für die Referenzmessstrecke 101-1 aufgelistet, während in den benachbarten Spalten einerseits die einem jeweiligen Durchflussmengenwert $Q_{Master}$ zugeordneten Durchflussmengenwerte $Q_{(1)}$, $Q_{(2)}$, $Q_{(3)}$, welche in der Prüfmessstrecke 101-2 an dem zu kalibrierenden Prüfling 125 gemessen werden, zusammen mit den zugeordneten Korrekturwerten $Q_{(1kor)}$, $Q_{(2kor)}$, $Q_{(3kor)}$ gegenübergestellt sind und andererseits in der letzten Spalte ein in dem Wiegebehälter 140 gemessenes Durchflussvolumen eingetragen ist. Die vom Durchflussmesser bzw. Prüfling 125 erfassten Messwerte $Q_{(1)}$, $Q_{(2)}$, $Q_{(3)}$ werden innerhalb eines vorbestimmten zeitlichen Messfensters schnell aufeinanderfolgend erfasst, um statistische Fluktuationen bzw. Schwankungen innerhalb des voreingestellten Messfensters zu berücksichtigen. Um zudem in den vom Prüfling 125 erfassten Messwerten systematische Messfehler, z.B. messtechnische Artefakte, zu eliminieren, die außerhalb eines vorgegebenen Toleranzbereichs von $\pm 2\%$ bezogen auf den Norm-Durchflussmengenwert von 160.0 l/h liegen, werden für jeden Messwert $Q_{(1)}$, $Q_{(2)}$, $Q_{(3)}$ die zugehörigen Korrekturwerte $Q_{(1kor)}$, $Q_{(2kor)}$, $Q_{(3kor)}$ ermittelt, indem außerhalb des Toleranzbereichs liegende Werte unberücksichtigt bleiben. Aus den jeweiligen Werten für QMaster, $T_{Master}$, p, und $Q_{(1kor)}$, $Q_{(2kor)}$, $Q_{(3kor)}$ wird ein jeweiliger Mittelwert gebildet, wobei aus den Mittelwerten für $Q_{(1kor)}$, $Q_{(2kor)}$, $Q_{(3kor)}$ ein einziger Mittelwert Q gebildet wird, welcher ein Maß für die Abweichung des zu kalibrierenden Prüflings 125 vom Normwert darstellt und für die in Tabelle 3 exemplarisch aufgeführte Messreihe Q = 161.84 l/h beträgt. Um die genaue Abweichung zu bestimmen, wird zusätzlich die durch Wiegen gewonnenen Messwerte mittels des Korrekturwerts bzw. Korrekturfaktors $k_3$ berücksichtigt. Die Berechnung des dritten Korrekturwerts $k_3$ erfolgt dabei nach Maßgabe der nachstehenden Gleichung:

$$k_{3,160} = Q_{Soll} - Q_{Master} - Q_{Waage} + Q_{Kal} \qquad\qquad \text{Gleichung (3)}$$

Dabei sind mit $Q_{Soll}$ das zu messende Durchflussvolumen, mit $Q_{Master}$ der jeweilige Mittelwert des an der Referenzmessstrecke gemessenen Durchflussvolumens, mit $Q_{Waage}$ der jeweilige Mittelwert des an der Referenzwaage 140 gemessenen Durchflussvolumens, mit $Q_{Kal}$ das mittlere Durchflussvolumen am Prüfling 125 und mit $k_{3,160}$ der dritte Korrekturwert bei einem Durchfluss eines vorbestimmten Durchflussvolumens bezeichnet. Mit der in Tabelle 3 beispielhaft aufgelisteten Messreihe ergibt sich somit für den dritten Korrekturwert $k_{3,160}$ = 160 - 161.02 - 158.97 + 161.84 = 1.85 l/h, d.h. bei einer vorbestimmten Durchflussmenge von 160 l/h und einer Medientemperatur von $T \cong 90$ °C ergibt sich eine mittlere Korrekturmenge von 1.85 l/h für den zu kalibrierenden Durchflussmesser.

Zur Gewinnung des Korrekturwerts bzw. Korrekturfaktors $k_3$ wird der optional vorgesehene Wiegevorgang im Rahmen des Kalibrierens durchgeführt, d.h. wenn in der Vorrichtung 100 stabile Druckverhältnisse und Temperaturverhältnisse vorliegen, die dann gegeben sind, wenn die Überprüfung der entsprechenden Messstellen $p_3 \cong p_4$ und $p_6 \cong p_1$ ergibt, worauf das Schaltventil 132 geöffnet und das zum Aktivieren eines Wiegevorgangs vorgesehene Schaltventil 135 so geschaltet werden, dass das aus der Prüfmessstrecke 101-2 kommende und daraufhin mittels des Wärmetauschers 134 zurückgekühlte Medium 102 zeitgesteuert in den Wiegebehälter 140 gelangt. Danach wird das zum Aktivieren des Wiegevorgangs vorgesehene Schaltventil 135 geschlossen und gegebenenfalls der Kreislaufbehälter 152 mittels des Schaltventils 154 nachgefüllt. Nach einer vorbestimmten Relaxationszeit wird die Füllmenge des Wiegebehälters 140 mittels der Wiegezellen 142 und des Füllstandsmessers 141 gemessen und in einer Kalibriertabelle abgespeichert.

Tabelle 3

| $Q_{Master}$ | $T_{Master}$ | p | $Q_{(1)}$ | $Q_{(1kor)}$ | $Q_{(2)}$ | $Q_{(2kor)}$ | $Q_{(3)}$ | $Q_{(3kor)}$ | $Q_{Waage}$ |
|---|---|---|---|---|---|---|---|---|---|
| 161.53 | 89.90 | 2.98 | 161.70 | 161.70 | 161.53 | 161.53 | 162.54 | 162.54 | |
| 161.10 | 90.00 | 3.05 | 161.80 | 161.80 | 161.21 | 161.21 | 162.21 | 162.21 | |
| 161.58 | 90.30 | 3.08 | 162.23 | 162.23 | 161.96 | 161.96 | 161.83 | 161.83 | |
| 160.66 | 90.80 | 3.15 | 161.72 | 161.72 | 160.58 | 160.58 | 161.96 | 161.96 | |
| 160.80 | 90.10 | 3.01 | 162.40 | 162.40 | 161.82 | 161.82 | 162.14 | 162.14 | |
| 161.46 | 90.30 | 3.00 | 162.22 | 162.22 | 161.56 | 161.56 | 162.53 | 162.53 | |
| 161.54 | 90.10 | 3.03 | 161.92 | 161.92 | 161.74 | 161.74 | 161.75 | 161.75 | |
| 160.90 | 90.10 | 3.06 | 161.66 | 161.66 | 161.22 | 161.22 | 161.83 | 161.83 | |
| 161.10 | 90.00 | 3.01 | 160.98 | 160.98 | 161.85 | 161.85 | 161.52 | 161.52 | |
| 160.96 | 89.90 | 2.98 | 160.56 | 160.56 | 161.64 | 161.64 | 162.85 | 162.85 | 159.3 |
| 160.86 | 89.90 | 3.00 | 161.90 | 161.90 | 161.53 | 161.53 | 162.41 | 162.41 | |
| 160.92 | 89.80 | 2.95 | 161.85 | 161.85 | 162.03 | 162.03 | 161.79 | 161.79 | |
| 161.21 | 89.90 | 3.04 | 162.43 | 162.43 | 161.96 | 161.96 | 161.83 | 161.83 | |
| 161.22 | 90.00 | 3.04 | 161.60 | 161.60 | 161.42 | 161.42 | 162.54 | 162.54 | |
| 161.52 | 90.10 | 2.95 | 162.48 | 162.48 | 161.52 | 161.52 | 162.38 | 162.38 | |
| 160.15 | 90.00 | 2.96 | 162.22 | 162.22 | 162.36 | 162.36 | 161.42 | 161.42 | |
| 160.50 | 89.80 | 2.99 | 161.70 | 161.70 | 161.41 | 161.41 | 162.05 | 162.05 | |
| 160.85 | 89.90 | 3.00 | 162.41 | 162.41 | 161.52 | 161.52 | 161.72 | 162.72 | |
| 161.87 | 89.80 | 2.92 | 161.67 | 161.67 | 161.43 | 161.43 | 162.33 | 162.33 | |
| 161.00 | 89.90 | 2.98 | 162.50 | 162.50 | 161.25 | 161.25 | 161.56 | 161.56 | 158.7 |
| 160.54 | 90.00 | 3.02 | 162.45 | 162.45 | 161.52 | 161.52 | 162.12 | 162.12 | |
| 160.20 | 90.10 | 3.04 | 162.27 | 162.27 | 161.43 | 161.43 | 161.92 | 161.92 | |
| 160.47 | 90.10 | 2.92 | 161.65 | 161.65 | 161.28 | 161.28 | 160.98 | 160.98 | |
| 160.85 | 90.00 | 3.02 | 161.21 | 161.21 | 161.89 | 161.89 | 161.76 | 161.76 | |
| 160.87 | 90.00 | 3.04 | 162.01 | 162.01 | 161.92 | 161.92 | 161.88 | 161.88 | |
| 160.90 | 89.80 | 3.02 | 161.40 | 161.40 | 162.39 | 162.39 | 161.92 | 161.92 | |
| 160.92 | 89.80 | 3.01 | 162.23 | 162.23 | 162.54 | 162.54 | 161.33 | 161.33 | |
| 161.83 | 89.90 | 3.02 | 161.65 | 161.65 | 161.88 | 161.88 | 161.45 | 161.45 | |
| 160.50 | 90.00 | 2.98 | 162.05 | 162.05 | 161.83 | 161.83 | 162.57 | 162.57 | |
| 160.89 | 89.90 | 2.96 | 161.30 | 161.30 | 162.37 | 162.37 | 161.74 | 161.74 | 158.9 |
| | | | 161.87 | | 161.69 | | 161.96 | | |
| 161.02 | 90.01 | 3.01 | 161.84 | | | | | | 158.97 |

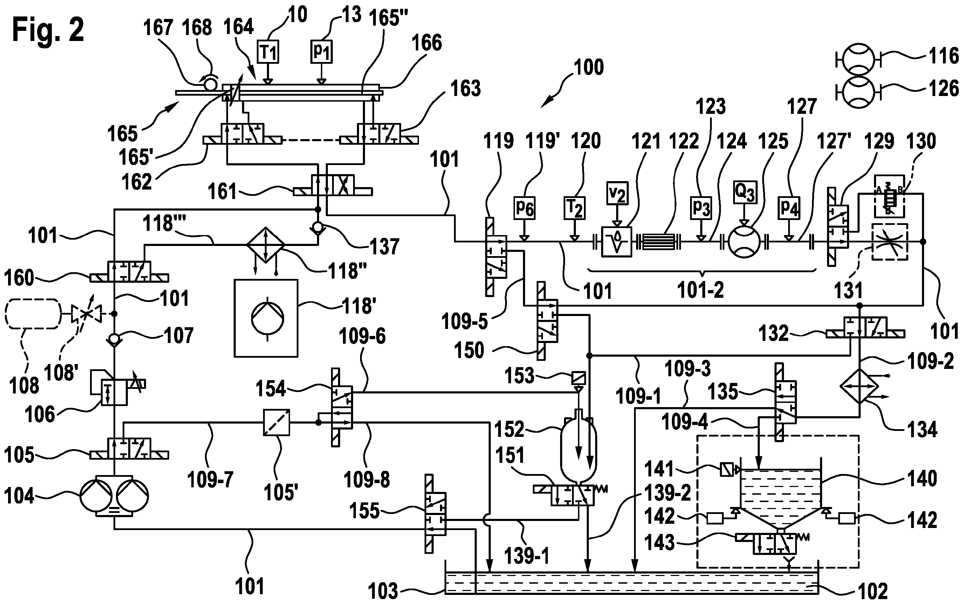

Fig. 2 zeigt die erfindungsgemäße Kalibriervorrichtung 100 gemäß einer zweiten Ausführungsform, welche sich von der in Fig. 1 dargestellten ersten Ausführungsform im Wesentlichen darin unterscheidet, dass die Referenzmessstrecke eine Linearkolbenantriebseinrichtung 164 aufweist, die vorteilhaft eine praktisch impulsfreie Messung mit einer höheren Genauigkeit im Vergleich zur ersten Ausführungsform (Fig. 1) ermöglicht. Dabei fördert ein in einem Arbeitszylinder 166 axialverschieblich aufgenommener Linearkolben 165 je nach Schaltstellung der Ventile 161, 162 und 163 alternierend in Vor- und Rückwärtsrichtung in den Arbeitszylinder eingeströmtes Medium zur Prüfmessstrecke 101-2 als definierten gleichmäßigen Volumenstrom weiter, wobei die Geschwindigkeit des Linearkolbens 165 über einen gemäß Pfeil 168 bewegten Drehwertgeber 167 gemessen wird. Dazu pumpt die Pumpe 104 das fluide Medium 102 aus dem Vorratstank 103 in die Leitung 101. Über das Umlaufventil 105, das Drosselventil 106, und das Rückschlagventil 107 strömt das Medium 102 vorbei an dem mit dem Membran 108 versehenen Drosselventil 108' zum Thermoventil 160. Das als 4/2-Wegeventil ausgebildete Thermoventil 160 gibt in seiner ersten Stellung einen direkt zu einem Schaltventil 161 führenden Leitungsabschnitt der Leitung 101 frei, während des in seiner zweiten Stellung den direkten Leitungsabschnitt der Leitung 101 sperrt und stattdessen eine parallel dazu verlaufende Nebenleitung 118''' freigibt, die über einen Wärmetauscher 118'' mit zugehörigem Temperiergerät 118' und ein Rückschlagventil 137 zum Schaltventil 161 führt. In der ersten Schaltstellung des Schaltventils 161 ist ein Durchgang der Leitung 101 durch die Linearantriebseinrichtung 164 auf Vorlauf für den Linearkolben 165 herstellbar, wobei das vom Thermoventil 160 kommende Medium über das vorderseitige Ende der Linearantriebseinrichtung 164 zuströmen kann und der Linearkolben 165 im Arbeitszylinder 166 vorläuft; dadurch kann das Medium über das rückseitige Ende der Linearantriebseinrichtung 164 zur Prüfmessstrecke 101-2 abströmen. Das Schaltventil 161 schaltet in seine zweite Schaltstellung um, wenn der Linearkolben 165 seinen Arbeitshub in Vorlaufrichtung ausführt und seine Endlage am Hubende, d.h. am rückseitigen Ende der Linearantriebseinrichtung 164, erreicht; in der zweiten Schaltstellung ist das Schaltventil 161 gegenüber seiner ersten Schaltstellung gewendet, wodurch der Durchgang der Leitung 101 durch die Linearantriebseinrichtung 164 nunmehr auf Rücklauf für den Linearkolben 165 herstellbar ist, so dass das vom Thermoventil kommende Medium über das rückseitige Ende der Linearantriebseinrichtung 164 zuströmen kann und der Linearkolben 165 im Arbeitszylinder 166 zurückläuft, wobei das Medium über das vorderseitige Ende der Linearantriebseinrichtung 164 zur Prüfmessstrecke 101-2 abströmen kann. Danach schaltet das Schaltventil 161 wieder in seine erste Schaltstellung für den nächsten Arbeitstakt um. Zwischen dem Schaltventil 161 und der Linearantriebseinrichtung 164 sind zwei Schaltventile 162, 163 angeordnet, welche im Wesentlichen dazu dienen, entweder den Vor- oder den Rückraum der Linearantriebseinrichtung 164 mit dem Medium 102 zu spülen bzw. füllen, wenn der Linearkolben 165 eine seiner beiden axialen Endlagen innerhalb des Arbeitszylinders 166 erreicht, bei denen jeweils eine Richtungsumkehr einsetzt, die im Zusammenspiel mit einem Umschalten des Schaltventils 161 erfolgt. Dabei gibt das Schaltventil 162 in seiner ersten Schaltstellung den sich zwischen dem Schaltventil 161 und dem vorderseitigen Ende der Linearantriebseinrichtung 164 verlaufenden Durchgang frei, während es in seiner zweiten Schaltstellung diesen Durchgang sperrt. Das Schaltventil 163 gibt sowohl in seiner ersten als auch zweiten Schaltstellung den sich zwischen dem Schaltventil 161 und dem rückseitigen Ende der Linearantriebseinrichtung 164 verlaufenden Durchgang frei. Die Schaltventile 161, 162, 163 sind als 4/2-Wegeventile ausgebildet.

Um nun eine Kalibrierung im "kalten" Zustand des Mediums durchzuführen, d.h. ohne Erwärmung des aus dem Vorratstank 103 herausgepumpten Mediums, bleibt das Thermoventil 160 in seiner ersten Ventilschaltstellung, in welcher der direkt zum Schaltventil 161 führende Leitungsabschnitt der Leitung 101 freigegeben ist. Zum Betrieb der Linearantriebseinrichtung 164 als Referenzmessstrecke sind die Schaltventile 161, 162 und 163 vorgesehen, welche als 4/2-Wegeventile ausgebildet sind. Das Schaltventil dient dazu, den Zufluss des Mediums zur Linearantriebseinrichtung 164 und den Abfluss aus der Linearantriebseinrichtung 164 je nach Bewegungsrichtung des Linearkolbens 165 zu schalten. Zum Kalibrieren eines Durchflussmessers bzw. Prüflings 125 wird der Linearkolben 165 auf eine vorbestimmte Geschwindigkeit beschleunigt. Nach Erreichen der vorbestimmten Geschwindigkeit wird der Messvorgang gestartet und vor dem Abbremsen des Linearkolbens bei seiner jeweiligen Endlage gestoppt. Nach einer relativ kurzen Spülzeit mittels der beiden Schaltventile 162, 163 zum Füllen des Arbeitszylinders erfolgt ein Neustart, indem durch Signalumkehr das Schaltventil 161 angesteuert wird und dabei die Schubrichtung des Linearkolbens 165 in der Linearantriebseinrichtung 164 geändert wird.

Um mit der Kalibriervorrichtung 100 gemäß Fig. 2 eine Kalibrierung im "heißen" Zustand des Mediums durchzuführen, d.h. durch Erwärmen des Mediums auf eine vorbestimmte Temperatur, wird das Thermoventil 160 in seine zweite Ventilschaltstellung umgeschaltet, in welcher der direkt vom Thermoventil 160 zum Schaltventil 161 führende Leitungsabschnitt 101 gesperrt und die parallel dazu verlaufende Nebenleitung 118''' freigegeben wird, die vom Thermoventil 160 über einen Wärmetauscher 118'' mit zugehörigem Temperiergerät 118' und ein Rückschlagventil 137 zum Schaltventil 161 führt. Ist eine vorbestimmte Messtemperatur des Mediums 102 erreicht, so wird der Kalibriervorgang gestartet, indem das Thermoventil 160 in seine zweite Schaltstellung geschaltet wird und das Medium 102 zum Schaltventil 161 weiterströmt. In der ersten Schaltstellung des Schaltventils 161 gelangt das Medium 102 über das in seiner ersten Schaltstellung geschaltete Schaltventil 162 in die Linearkolbenantriebseinrichtung 164. Dort wird der Linearkolben 165 in Vorlaufrichtung auf eine vorbestimmte Geschwindigkeit beschleunigt. Das Medium 102 wird dabei in Vorlaufrichtung durch den Arbeitszylinder gepresst, tritt an dem rückseitigen Ende der Linearantriebseinrichtung 164 aus und gelangt dann über das Schaltventil 163 zum Schaltventil 161. Von dort strömt das Medium 102 über das durchgeschaltete Leerlaufventil 119 in die Prüfmessstrecke 104' mit dem zu kalibrierenden Durchflussmesser bzw. Prüfling 125. Für den darauffolgenden Rücklauf des Linearkolbens 165 wird nach dem Spülen der Linearentriebseinrichtung 164 das Schaltventil 161 durch Umschalten in dessen zweite Schaltstellung gewendet. Der Linearkolben wird in Rücklaufrichtung auf die vorbestimmte Geschwindigkeit beschleunigt, wobei das Medium über das vorderseitige Ende der Linearantriebseinrichtung ausströmt und über das Schaltventil 162, dann über das gewendete Schaltventil 161 und schließlich über das Leerlaufventil 119 in die Prüfmessstrecke 101-2 gelangt. Die Prüfmessstrecke 101-2 ist im Wesentlichen identisch zur ersten Ausführungsform von Fig. 1 ausgebildet, wobei gleiche Bezugszeichen gleiche oder ähnliche Elemente wie in Fig. 1 bezeichnen. Dasselbe gilt für den übrigen Aufbau der zweiten Ausführungsform gemäß Fig. 2. Das der Prüfmessstrecke 101-2 in Strömungsrichtung nachgeordnete Schaltventil 129 ist, wie in der Ausführungsform von Fig. 1, dazu vorgesehen, den Strömungspfad entweder über das Drosselventil 130 oder das Drosselventil 131 zu schalten. Von dort gelangt das Medium 102 zu dem Schaltventil 132, in dessen erster Schaltstellung das Medium 102 zum Wiegebehälter 140 leitbar ist, wenn eine zusätzliche Massebestimmung des durch die Prüfmessstrecke 101-2 durchgeleiteten Mediums 102 erfolgen soll. In diesem Fall wird nach Durchtritt durch das in seine erste Schaltstellung geschaltete Schaltventil 132 das Medium 102 in dem Wärmetauscher 134 rückgekühlt und gelangt von dort aus zum Schaltventil 135, das in einer ersten Schaltstellung das Medium 102 zu dem Wiegebehälter 140 leitet, während in dessen zweiter Schaltstellung das Medium 102 wieder zurück in den Vorratstank 103 gelangt.

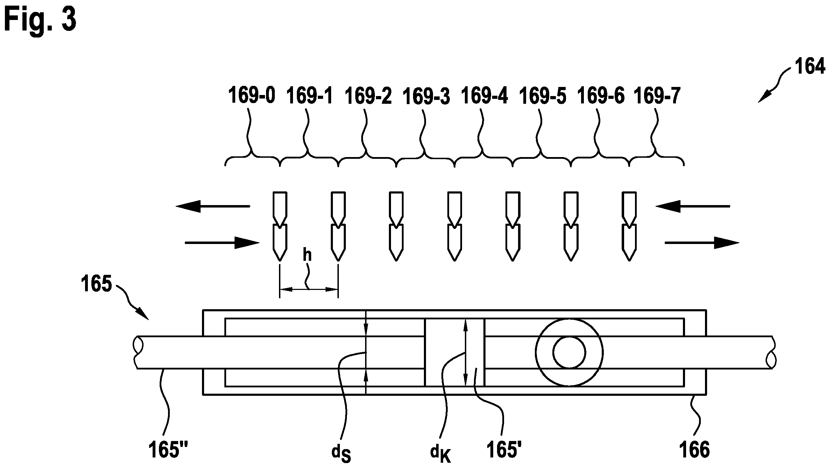

Fig. 3 zeigt eine stark schematisch gehaltene Detailansicht der Linearkolbenantriebseinrichtung 164 von Fig. 2. Der Linearkolben 165 weist eine Kolbenstange 165" und eine daran radial vorstehend ausgebildete Verdickung 165' auf, deren radialer Außendurchmesser $d_k$ der Verdickung 165' etwa dem radialen Innendurchmesser des Arbeitszylinders 166 entspricht und größer als der radiale Durchmesser $d_S$ der Kolbenstange 154" ist. Der im Wesentlichen ringförmige Hohlraum zwischen zylindrischer Innenwandung des Arbeitszylinders und der Kolbenstange dient als Aufnahmevolumen für das in den Arbeitszylinder über eine in Fig. 3 nicht dargestellt erste Öffnung einströmende Medium, das mittels der an der Kolbenstange ausgebildeten radialen Verdickung 165' während eines Arbeitstaktes des Linearkolbens 165 über eine in Fig. 3 nicht dargestellte zweite Öffnung aus dem Arbeitszylinder herausgepresst wird. Der Gesamthub des Arbeitszylinders 166 ist in gleich lange Segmente 169-0 bis 169-7 von konstanter Axiallänge h unterteilt, wobei am jeweiligen Übergang zwischen zwei voneinander unmittelbar benachbarten Segmenten jeweils ein Positionssensor angeordnet ist, welcher einer Steuerungseinrichtung signalisiert, wenn die Verdickung 165' des Linearkolbens 165 die Position des jeweiligen Sensors erreicht. Beim Vorlauf des Linearkolbens 165 wird dieser in einem ersten Segment auf eine vorbestimmte Geschwindigkeit beschleunigt und im letzten Segment wieder abgebremst, während sich der Linearkolben 165 in den dazwischen liegenden Segmenten mit konstanter Geschwindigkeit bewegt und dabei jedes Mal, wenn die Verdickung des Linearkolbens 165 eines dieser Segmente erreicht bzw. passiert, der dort positionierte Sensor dies an die Steuerungseinrichtung signalisiert, die in Reaktion darauf einen Messvorgang durchführt, bei dem sowohl der Durchfluss $Q_{Master}$ in dem entsprechenden Segment der Linearantriebseinrichtung wie auch der zeitlich damit korrespondierende Durchfluss am Prüfling 125 gemessen wird. Dazu wird der Durchfluss in der Linearantriebseinrichtung nach Maßgabe des effektiven Innenvolumens des Arbeitszylinders 166 und der Zeitspanne $\Delta t$ bestimmt, die der Linearkolben 165 benötigt, um bei konstanter Geschwindigkeit die Länge des entsprechenden Segments zu durchlaufen. Beim Rücklauf des Linearkolbens 165 werden die Segmente 169-0 bis 169-7 in umgekehrter Reihenfolge durchlaufen, wobei der mit seiner Verdickung 165' im letzten Segment stehende Linearkolben 165 im vorletzten Segment beschleunigt und im ersten Segment abgebremst wird, während er sich in den dazwischen liegenden Segmenten mit konstanter Geschwindigkeit bewegt und dabei die jeweiligen Messvorgänge mittels der an den Übergängen der Segmente positionierten Sensoren durchgeführt werden. Die konstruktive Auslegung des Arbeitszylinders und des Linearkolbens der Linearkolbenantriebseinrichtung richtet sich nach der Größenordnung des zu messenden Durchflussvolumens.

Tabelle 4 zeigt exemplarisch eine zum Kalibrieren eines Prüflings 125 dienende Messreihe mit der Vorrichtung gemäß Fig. 2. Dabei sind die in Tabelle 4 aufgelisteten Messdaten für jeden Arbeitstakt, d.h. für eine jeweiligen Vorlauf bzw. Rücklauf des Linearkolbens 165, in jeweils fünf Messdatensätze aufgegliedert, wobei jeder Datensatz die Messwerte für den Durchfluss $Q_{Master}$, die Temperatur $T_{Master}$ und den Druck p in der als Referenzmessstrecke dienenden Linearantriebseinrichtung 164 und der dazu korrespondierende Durchflussmesswert $O_{Prüfling}$ am Prüfling in der Prüfmessstrecke sowie dessen korrigierter Wert $Q_{(1kor)}$ für ein jeweiliges Segment innerhalb des Gesamthubs des Linearkolbens umfasst, in dem sich der letztere mit konstanter Geschwindigkeit bewegt. Die für einen jeweiligen Arbeitstakt untereinander aufgelisteten fünf Datensätze sind für fünf unmittelbar aufeinanderfolgende Segmente aufgenommen. In der letzten Spalte ist für jeden der vier aufeinanderfolgenden Arbeitstakte das durch einen Wiegevorgang mittels des Wiegebehälters 140 jeweils ermittelte Durchflussvolumen $Q_{Waage}$ angegeben. Dazu steuert die Steuerungseinrichtung die beiden Schaltventile 132, 135 in Reaktion auf die von den Positionssensoren in der Linearantriebseinrichtung 164 Signale, um den Strömungspfad zum Wiegebehälter 140 während jener Zeitspanne freizugeben, in welcher sich der Linearkolben mit konstanter Geschwindigkeit durch die entsprechenden Segmente bewegt. Die in der untersten Zeile von Tabelle 4 angegebenen Werte sind aus der Zusammenschau der einzelnen Arbeitstakte jeweils errechnete Mittelwerte für $Q_{Master}$, $T_{Master}$, p, $Q_{Prüfling}$, $Q_{(1kor)}$, und $Q_{Waage}$.

Anhand der in Tabelle 4 angegebenen Messwerte für $Q_{Master}$, $T_{Master}$, p, $Q_{Prüfling}$, $Q_{(1kor)}$, und $Q_{Waage}$ ist ein Korrekturwert bzw. Korrekturfaktor $k_{3,160}$ für einen Soll-Durchfluss anhand der Gleichung (3) bestimmbar. Die mittlere Korrekturmenge beträgt danach bei einem Sollwert von 160.0 l/h und einer Medientemperatur von 90.19 °C gemäß

$k_{3,160} = Q_{Soll} - Q_{Master} - Q_{Waage} + Q_{Kal} = 160.0 - 160.63 - 159.46 + 161.77 \cong 1.69$ l/h.

Tabelle 4

| | $Q_{Master}$ | $T_{Master}$ | p | $Q_{Prüfling}$ | $Q_{(1kor)}$ | $Q_{Waage}$ |
|---|---|---|---|---|---|---|
| **Vorlauf** | 160.15 | 89.90 | 3.51 | 161.70 | 161.70 | |
| | 160.30 | 90.00 | 3.52 | 161.60 | 161.60 | |
| | 160.48 | 90.30 | 3.52 | 161.88 | 161.88 | |
| | 159.88 | 90.80 | 3.53 | 161.27 | 161.72 | |
| | 160.12 | 89.90 | 3.49 | 161.90 | 161.90 | 159.6 |
| **Rücklauf** | 160.92 | 90.28 | 3.56 | 161.85 | 161.85 | |
| | 160.71 | 90.19 | 3.58 | 161.66 | 161.66 | |
| | 160.82 | 90.17 | 3.58 | 161.60 | 161.60 | |
| | 160.75 | 90.18 | 3.57 | 161.78 | 161.78 | |
| | 160.89 | 90.22 | 3.57 | 161.22 | 161.22 | 159.43 |
| **Vorlauf** | 160.78 | 90.21 | 3.57 | 161.88 | 161.88 | |
| | 160.69 | 90.24 | 3.60 | 161.78 | 161.78 | |
| | 160.71 | 90.19 | 3.58 | 161.72 | 161.72 | |
| | 160.70 | 90.20 | 3.57 | 161.85 | 161.85 | |
| | 160.69 | 90.18 | 3.58 | 161.70 | 161.70 | 159.89 |
| **Rücklauf** | 160.54 | 90.16 | 3.56 | 162.45 | 162.45 | |
| | 161.20 | 90.18 | 3.54 | 162.27 | 162.27 | |
| | 160.47 | 90.18 | 3.50 | 161.65 | 161.65 | |
| | 160.85 | 90.20 | 3.50 | 161.21 | 161.21 | |
| | 160.87 | 90.21 | 3.52 | 162.01 | 162.01 | 158.9 |
| | 160.63 | 90.19 | 3.55 | 161.77 | | 159.46 |
| | | | | 161.77 | | |

Um noch Messunsicherheiten bei der Kalibrierung zu berücksichtigen, sind zusätzlich zum Korrekturwert bzw. Korrekturfaktor $k_3$, welcher die zufällige, d.h. statistische Komponente der Messabweichung erfasst, weitere Variablen, welche zur Abschätzung einer systematischen Komponente der Messabweichung dienen, gemäß der nachstehenden, auf der Grundlage der mathematischen Statistik bzw. Wahrscheinlichkeitstheorie fußenden Gleichung in Betracht zu ziehen:

$$\pm u = 0.5 * \sqrt{Q_{Soll}^2 - Q_{Master}^2 - Q_{Waage}^2 + Q_{Kal}^2 + c_R^2 + c_S^2 + c_L^2 + c_I^2 + c_V^2} \quad \text{Gl. (4a)}$$

Dabei ist mit $\pm u$ die Messunsicherheit bezeichnet, während die Variablen $c_R$, $c_L$, $c_S$, $c_I$ und $c_V$ die systematischen Komponenten der Messabweichung bezeichnen.

So ist mit $c_R$ eine Variable bezeichnet, welche eine Bereichsspanne, Reaktionszeit oder Messtoleranz berücksichtigt, die als Vergleichstellendifferenz beim Vergleich von Messungen am Referenzdurchflussmesser und zu kalibrierenden Prüfling auftreten kann. Mit $c_L$ ist eine Variable bezeichnet, die zum Linearisieren der Referenzmessstrecke dient und messtechnische Streuungen z.B. aufgrund von Eigenschwingungen des Fluidstroms, Schaltpulsationen von Ventilen, Druckschwankungen durch Regelungsvorgängen berücksichtigt. Mit $c_S$ ist eine Variable bezeichnet, welche die Langzeitstabilität beeinträchtigende Alterungsprozesse innerhalb der Referenzmessstrecke z.B. durch Abrieb an Strömungskanten, durch Auftreten von Leckstellen oder Ablagerungen oder durch elektrischen Verschleiß berücksichtigt. Mit $c_I$ ist eine Variable bezeichnet, welche eine bei der Interpolation bzw. Berechnung von Zwischenwerten auftretende Unsicherheit berücksichtigt. Mit $c_V$ ist schließlich eine Variable bezeichnet, welche eine Viskositätsdifferenz berücksichtigt, die insbesondere beim Heißkalibrieren mit zyklischem Wiegen beim Nachfüllen des Mediums aus dem Vorratstank aufgrund von unterschiedlichen Medientemperaturen auftritt. Empirische Untersuchungen haben gezeigt, dass für $c_R$ eine Messunsicherheit von etwa 0.22 l/h, für $c_L$ eine Messunsicherheit im Bereich von 0.20 bis 0.3, für $c_S$ eine Messunsicherheit im Bereich von 0.12 bis 0.15, für $c_i$ eine Messunsicherheit im Bereich von 0.10 bis 0.15 und für $c_V$ eine Messunsicherheit von etwa 0.05 anzusetzen ist.

Unter Vernachlässigung der systematischen Variablen $c_I$ und $c_V$ : lässt sich Gleichung (4a) auch in expliziter Abhängigkeit vom Korrekturwert bzw. Korrekturfaktor $k_{3,T}$ gemäß der nachfolgenden Gleichung darstellen:

$$\pm u = 0.5 * \sqrt{k_{3,T}{}^2 + c_R^2 + c_S^2 + c_L^2} \qquad \text{Gleichung (4b)}$$

Exemplarisch ergibt sich aufgrund der in Tabelle 3 aufgeführten Messdatenbasis für die gesamte Messunsicherheit gemäß Gleichung (4b): $\pm u = 0.5 * \sqrt{1.85^2 + 0.22^2 + 0.15^2 + 0.30^2} = 0.947$ in Einheiten von Liter/Stunde. Mithin ist gemäß dieser Datenbasis der Durchflusswert von 160 l/h mit einer - aufgerundeten - Mindesttoleranz von $\pm 1$ zu versehen, so dass für den Durchfluss $160 \pm 1$ l/h gilt.

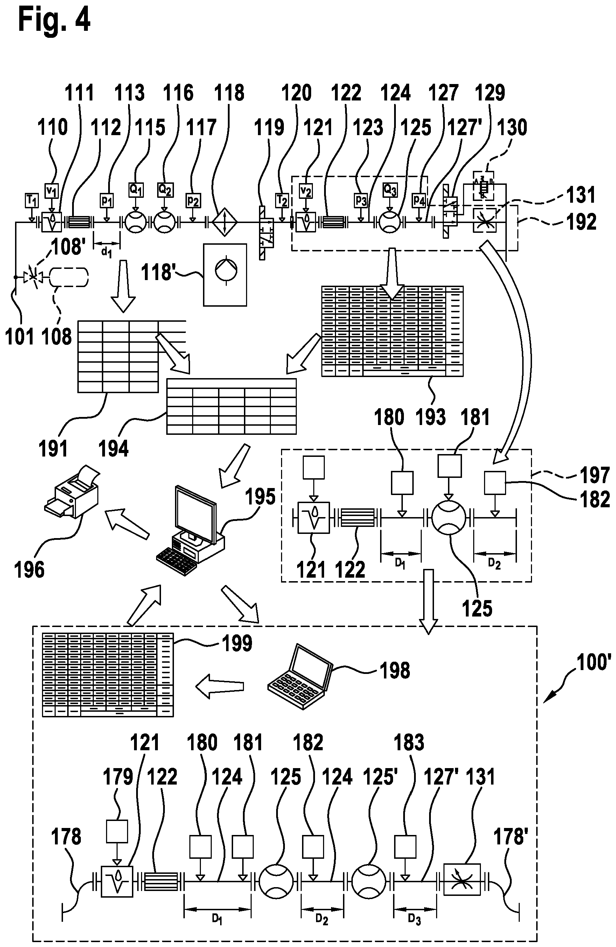

Fig. 4 zeigt in schematischer Darstellung die erfindungsgemäße Kalibriervorrichtung 100', die aus einem Teil der Kalibriervorrichtung 100 gemäß einer ersten Ausführungsform von Fig. 1 gebildet und - im Unterschied zu der für den stationären Einsatz vorgesehenen Kalibriervorrichtung 100 von Fig. 1 - für den mobilen Einsatz vorgesehen ist. Dabei bezeichnen gleiche Bezugzeichen wie in Fig. 1 gleiche oder ähnliche Elemente. Um eine Kalibrierung mobil, d.h. an einem beliebigen Einsatzort, z.B. bei einem Kunden, durchführen zu können, ist ein Teil der anhand eines Ausschnitts im oberen Bereich von Fig. 4 dargestellten Vorrichtung 100 gemäß der ersten Ausführungsform demontierbar, d.h. als Baugruppeneinheit 192 ausgebildet. Bei dieser Baugruppeneinheit handelt es sich im Wesentlichen um die Prüfmessstrecke 101-2 der Vorrichtung 100 von Fig. 1. Um nun die Baugruppeneinheit 192 für den mobilen Vorort-Einsatz einsatzfähig auszubilden, wird zunächst die stationäre Vorrichtung 100 der zuvor bereits beschriebenen Kalibrierprozedur für einen in der Baugruppeneinheit 192 aufgenommenen Durchflussmesser bzw. Prüfling 125 unterworfen. Dabei werden einerseits die oben beschriebenen Variablen $c_R$, $c_L$, $c_S$, $c_i$ und $c_V$ für die beiden Norm-Durchflussmesser 115, 116 anhand einer Tabelle 191 erfasst und andererseits wird für die Baugruppeneinheit 192 eine Spezifikationstabelle 193 analog der bereits beschriebenen Tabelle 3 erstellt. Beide Datengruppen 191, 193 werden zu einer die Baugruppeneinheit 192 charakterisierenden Referenztabelle 194 zusammengeführt, welche als Datenbank in einem Stationsrechner 195 abgespeichert wird. Danach wird die Baugruppeneinheit 192 aus der stationären Vorrichtung 100 ausgebaut und zum jeweiligen Einsatzort transferiert, wo die Baugruppeneinheit als Referenzmessstrecke für einen zu kalibrierenden Prüfling 125' dient. Dazu wird der zu kalibrierende Prüfling 125' an die Baugruppeneinheit 192 angegliedert, indem der Prüfling 125' eingangsseitig mit dem abströmseitigen Ende der Ablaufstrecke 124 der Baugruppeneinheit 192 und ausgangsseitig mit einer eine Druckmessstelle 183 aufweisende Auslaufstrecke 127' fluidisch verbunden wird, an welche ein Proportionalventil, vorzugsweise das Proportional-Drosselventil 131 der Baugruppeneinheit 192, angeflanscht wird. Zum Anschließen an eine Medienversorgung sind eine dem Viskositätssensor 121 der Baugruppeneinheit 192 zuströmseitig vorgeordnete Verbindungsleitung 178 und eine Proportionalventil 131 abströmseitig nachgeordnete Verbindungsleitung 178' vorgesehen. Mithin setzt sich die mobil ausgebildete Kalibriervorrichtung 100' im Wesentlichen aus der Baugruppeneinheit 192, dem daran angeflanschten Durchflussmesser bzw. Prüfling 125', der Ablaufstrecke 127' mit nachgeordnetem Proportional-Drosselventil 131 sowie den beiden Verbindungsleitungen 178, 178' zusammen. Der Kalibriervorrichtung 100' ist eine mobile Stationsrechnereinheit 198 zugeordnet, welche der Steuerung der in der Kalibriervorrichtung 100' aufgenommenen Elemente und der Messdatenerfassung und deren Auswertung auf der Basis der von dem Stationsrechner 195 zuvor an die mobile Stationsrechnereinheit 198 übergegebenen Referenztabelle 194 dient. Um den Kalibrierbetrieb aufzunehmen, wird die Kalibriervorrichtung 100' mit dem Medium beschickt, wobei der Prüfling 125' durch das durchströmende Medium auf die vorbestimmte Temperatur erwärmt wird, welche durch die mobile Stationsrechnereinheit 198 überwacht wird. Der erforderliche Betriebsdruck ist z.B. manuell mittels des Proportional-Drosselventils 131 einregelbar. Ist die vorbestimmte Temperatur erreicht, so werden die entsprechenden Durchflussmessdaten am Prüfling 125' automatisch und kontinuierlich mittels der Stationsrechnereinheit 198 erfasst und aufbereitet in einer Kalibriertabelle 199 abgelegt, wobei der entsprechende Korrekturfaktor für den zu kalibrierenden Durchflussmesser bzw. Prüfling 125' und die Messunsicherheit anhand Gleichung (4a) bzw. (4b) errechnet wird. Daraus ist schließlich ein Kalibrierprotokoll für den Prüfling 125' generierbar.

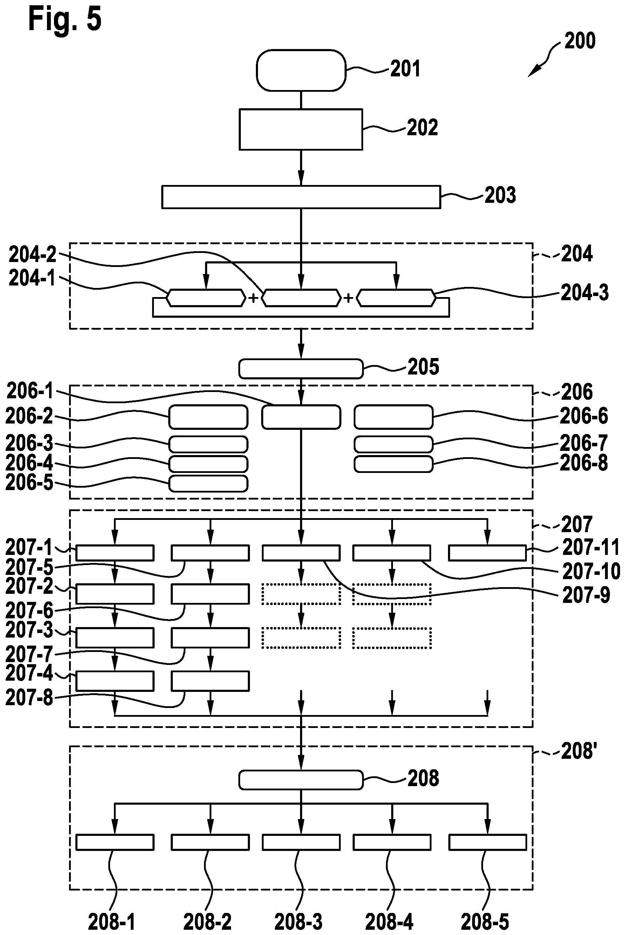

Fig. 5 zeigt ein Flussdiagramm 200 mit den wesentlichen Verfahrensschritten eines Hauptprogramms als Teil eines erfindungsgemäßen Steuerungsverfahrens, welches zur Steuerung der erfindungsgemäßen Kalibriervorrichtung 100 und zur Messdatenerfassung dient und in der nicht dargestellten Steuerungseinrichtung implementiert ist. In einem ersten initialisierenden Schritt 201 wird die Kalibriervorrichtung 100 eingeschaltet und in einem daran anschließenden Schritt 202 die Referenzmessstrecke 101-1 mit dem Medium gefüllt und entlüftet. Danach werden in einem Schritt 203 Referenzfunktionen in der Referenzmessstrecke, wie z.B. die darin aufgenommenen Sensoren, aktiviert, worauf in dem sich anschließenden Block 204 im Segment 204-1 die Temperatur, im Segment 204-2 der Druck und im Segment 204-3 die Viskosität des Mediums laufend erfasst werden, wobei diese Parameter im Hinblick auf Stabilität innerhalb vorbestimmter, d.h. zulässiger Grenzen geprüft werden und anschließend in einem Anzeigeschritt 205 bei positiv durchgeführter Überprüfung dieser Parameter eine Bereitschaftsanzeige erfolgt. In einem sich daran anschließenden Block 206 wird ein Auswahlmenü ausgegeben mit mehreren Auswahlfenstern 206-1 bis 206-8, in welchen entweder gemäß 206-1 eine Referenz gewählt wird oder Daten weiterer Geräte editierbar oder Verlaufsdaten auswertbar sind. In einem darauf folgenden Block 207 wird eine für den zu prüfenden bzw. kalibrierenden Durchflussmesser geltende Referenz gewählt; anhand von Auswahlfenstern 207-1, 207-5, 207-9, 207-10, 207-11 wird zunächst ein Auswahl unter Durchflussmessern getroffen, denen unterschiedliche physikalische Messprinzipien zugrunde liegen. wie z.B. Zahnrad-Durchflussmessern oder Turbinen-Durchflussmessern usw.; dann wird anhand von Auswahlfenstern 207-2, 207-3, 207-4, 207-6, 207-7, 207-8 eine Auswahl unter verschiedenen Typen getroffen, die einem nach einem bestimmten physikalischen Messprinzip arbeitenden Durchflussmesser untergeordnet sind Dabei werden die gespeicherten Datensätze von einer Vielzahl von Durchflussreferenzen bereitgestellt. Danach wird in Block 208' über ein Fenster 208 zur Wahl der Betriebsart für die in Block 207 eingestellte Referenz eine Auswahl unter verschiedenen Kalibrierarten anhand von Auswahlfenstern 208-1, 208-2, 208-3, 208-4, 208-5 getroffen, die nachstehend im einzelnen erläutert werden.

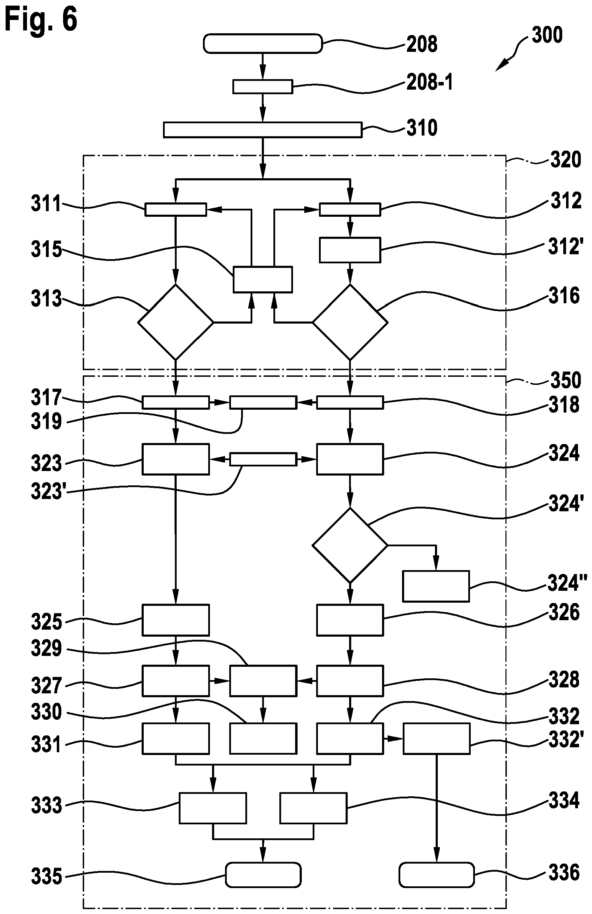

Fig. 6 zeigt ein Flussdiagramm 300, das den Verfahrensablauf in einem Unterprogramm veranschaulicht, wenn in Block 208' anhand des Auswahlfensters 208-1 des Hauptprogramms von Fig. 5 die Standard-Betriebsart eingestellt ist. In der Standardbetriebsart werden Durchflussmesser eines Typs miteinander verglichen, indem in der Referenzmessstrecke ein ausgewählter Masterdurchflussmesser mit einem zu kalibrierenden Prüfling verglichen wird. In einem Schritt 310 wird die Anzahl der Messwerte für die der Kalibrierung dienenden Durchflussmessung festgelegt. Danach wird in einem Block 320 sowohl die Referenzmessstrecke als auch die Prüfmessstrecke mit gleichen Parametern stabilisiert, wobei als Parameter die physikalischen Messgrößen Druck, Viskosität, Temperatur und Volumen des durchströmenden Mediums vorgesehen werden. Dabei werden innerhalb des Blocks 320 einerseits in einem Schritt 311 für die Referenzmessstrecke diese Parameter erfasst, während in einem Schritt 312 andererseits dieselben Parameter für die Prüfmessstrecke erfasst werden. An den Schritt 311 schließt sich der Abfrageschritt 313 an, worin eine Abfrage erfolgt, ob die erfassten Parameter, d.h. Druck, Viskosität, Temperatur und Volumen des Mediums innerhalb der Referenzmessstrecke konstant sind. Ist das Resultat der Abfrage 313 negativ, so wird in Schritt 315 die Referenzmessstrecke befüllt, worauf ein Rücksprung zu Schritt 311 erfolgt, während bei positivem Resultat der Abfrage 313 eine Bereitmeldung 317 mit einem Übergang zu Block 350 erfolgt. An den Schritt 312 schließt sich ein Zwischenschritt 312' zum Befüllen der Prüfmessstrecke und danach ein Abfrageschritt 316 an, worin eine Abfrage erfolgt, ob die erfassten Parameter, d.h. Druck, Viskosität, Temperatur und Volumen des Mediums innerhalb der Prüfstrecke konstant sind. Ist das Resultat der Abfrage 316 negativ, so wird in Schritt 315 die Referenzmessstrecke befüllt, worauf ein Rücksprung zu Schritt 312 erfolgt, während bei positivem Resultat der Abfrage 316 eine Bereitmeldung 318 mit einem Übergang zu Block 350 erfolgt.

Liegt aus beiden Abfrageschritten 313 und 316 in Block 310 jeweils ein positives Resultat anhand der Bereitmeldungen 317 und 318 vor, so wird innerhalb des Blocks 350 in einem Schritt 319 die Kalibrierung gestartet, da ein stabiler Prüfzustand erreicht ist. Nach Start der Kalibrierung 319 werden für den zu messenden Durchfluss sowohl in einem Schritt 323 für die Referenzmessstrecke die Anzahl der Referenzmessdaten als auch in einem Schritt 324 für die Prüfmessstrecke die Anzahl der Prüfmessdaten festgelegt, z.B. jeweils 50 Messungen für einen Messzyklus, wobei für beide Messstrecken in einem Schritt 323' die Anzahl der Messzyklen definiert wird. An den Schritt 323 schließt sich der Schritt 325 an, in welchem die Messdaten für die Referenzmessstrecke erfasst werden. Parallel dazu schließt sich an den Schritt 324 für die Festlegung der Anzahl der Messdaten in der Prüfmessstrecke ein Zwischenschritt 324' an, worin eine Abfrage erfolgt, ob für die während eines Messzyklus durchfließende Durchflussmenge eine Wiegeprozedur durchgeführt und deren Resultat mit den Referenz- und Prüfmessdaten verglichen werden soll; wird die Abfrage 324' positiv beantwortet, so wird in Schritt 324" zyklisch die Durchflussmenge des Mediums gewogen, während andernfalls ein Sprung zu Schritt 326 erfolgt, in dem für die Prüfmessstrecke die jeweiligen Messdaten erfasst werden. Sind die parallel ablaufenden Schritte 325 und 326 zum Erfassen der jeweiligen Messdaten abgeschlossen, so schließt sich an den Schritt 325 ein Schritt 327 zum Auswerten der in der Referenzmessstrecke erfassten Messdaten an, während sich analog dazu an den Schritt 326 ein Schritt 328 zum Auswerten der in der Prüfmessstrecke erfassten Messdaten anschließt. In einem gemeinsamen Berechnungsschritt 329 werden die Daten sowohl aus Schritt 327 als auch aus Schritt 328 zusammengezogen und die jeweiligen Differenzen berechnet, welche dann in einem sich daran anschließenden Schritt 330 auf vorbestimmte Toleranzen hin überprüft werden. Außerdem schließt sich an den Schritt 327 ein Schritt 331 an, in welchem die Messunsicherheit für die auf der Referenzmessstrecke gewonnenen Messdaten berechnet wird, während in einem sich an den Schritt 328 anschließenden Schritt 332 die entsprechende Messunsicherheit für die auf der Prüfmessstrecke gewonnenen Messdaten berechnet wird, wobei die Berechnung auf der Basis von Gleichung (4a) bzw. (4b) erfolgt. Ergibt die jeweilige Berechnung in den Schritten 331 und 332 wie auch in dem gemeinsamen Prüfschritt 330, dass die Gesamttoleranz eingehalten wurde und ein vorbestimmtes Maß der Messunsicherheit, z.B. 1/5, nicht überschritten wurde, so ist die Kalibrierung abgeschlossen. Die entsprechenden Resultate aus den Schritten 331 und 332 werden einerseits in einem Anzeigeblock 333 tabellarisch und andererseits in einem Anzeigeblock 334 als Soll-/Istwert-Gegenüberstellung graphisch dargestellt. In einem darauf folgenden Schritt 335 sind die Daten aus den Schritten 333, 334 als Protokoll ausgebbar. Zudem werden in einem sich an den Berechnungsschritt 332 anschließenden Schritt 332' Korrekturwerte in den Messdaten für die Prüfmessstrecke ermittelt und sodann in einem Schritt 336 zur Datenübergabe für andere Unterprogrammblöcke bereitgestellt.

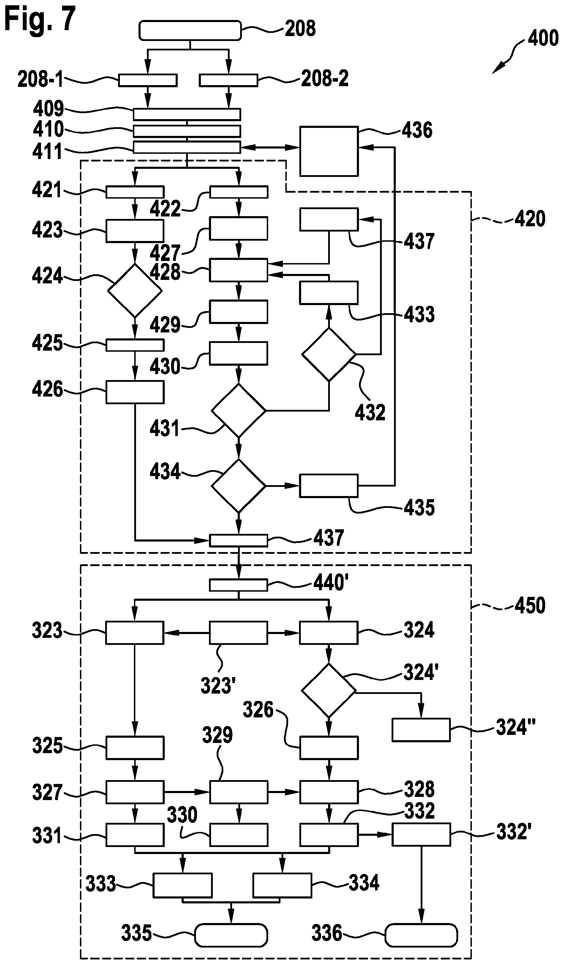

Fig. 7 zeigt ein Flussdiagramm 400, das den Verfahrensablauf veranschaulicht, wenn in Block 208' von Fig. 5 anhand des Auswahlfensters 208-2 die Applikationsbetriebsart eingestellt ist. In der Applikationsbetriebsart wird ein zu kalibrierender Durchflussmesser unter Berücksichtigung von ermittelten Korrekturfaktoren und unter der Voraussetzung einer bereits durchgeführten Grundkalibrierung kalibriert. In einem Schritt 409 wird die Anzahl der zu erfassenden Messwerte festgelegt. Danach wird in einem Schritt 410 ein Messbereich festgelegt, für den eine Linearisierung der zu erfassenden Messwerte durchzuführen ist. Im Anschluss daran wird in einem Schritt 411 eine Applikationstabelle angelegt, in welcher die zu ermittelnden Korrekturwerte abgespeichert werden. Danach wird in einem Block 420 sowohl die Referenzmessstrecke als auch die Prüfmessstrecke mit gleichen Parametern stabilisiert, wobei als Parameter die physikalischen Messgrößen Druck, Viskosität, Temperatur und Durchflussvolumen des Mediums vorgesehen werden. Innerhalb des Blocks 420 werden sowohl in einem Schritt 421 die Referenzmessstrecke als auch in einem Schritt 422 für die Prüfmessstrecke in Messbereitschaft versetzt. In einem sich an den Schritt 421 anschließenden Schritt 423 wird die Referenzmessstrecke aktiviert, d.h. die Steuereinrichtung erfasst laufend die von den jeweiligen Sensoren übermittelten Messdaten, worauf in einem Abfrageschritt 424 eine Abfrage erfolgt, ob die erfassten Parameter bzw. Messdaten, d.h. Druck, Viskosität, Temperatur und Durchflussvolumen des Mediums innerhalb der Referenzmessstrecke konstant sind. Ist das Resultat positiv, so erfolgt in einem Schritt 425 eine Bereitmeldung, da die Referenzmessstrecke innerhalb vorbestimmter Toleranzgrenzen in einem stabilen Betriebszustand ist. Ein darauf folgender Schritt 426 ist als Warteschleife ausgebildet, bis in einem Nebenzweig des Blocks 420 für die Prüfmessstrecke ebenfalls eine Bereitmeldung erfolgt. In dem Nebenzweig schließt sich an den Schritt 422 ein Zwischenschritt 427 zum Befüllen der Prüfmessstrecke und danach ein Schritt 428 zum Heizen bzw. Regeln des Mediums auf eine vorbestimmte Prüftemperatur innerhalb der Prüfmessstrecke an. Danach wird in einem Schritt 429 der Prüfdruck so eingeregelt, dass die Durchflussmenge am Prüfling ein stabiles Niveau erreicht, worauf in einem Schritt 430 ein Warmlauf des Prüflings auf die vorbestimmte Temperatur erfolgt. Nach erfolgtem Warmlauf des Prüflings wird in einem Vergleichsschritt 431 geprüft, ob die gemessene Viskosität des Mediums einem vorbestimmten Wert entspricht. Fällt das Resultat des Vergleichs 431 negativ aus, so wird in einem anschließenden Vergleichsschritt 432 geprüft, ob die gemessene Viskosität zu hoch gegenüber einem vorbestimmten Wert ist; bei negativem Resultat in Schritt 432 wird in Schritt 433 die Temperatur erhöht mit einem Sprung zu Schritt 428 zur Temperaturregelung des Mediums. Bei positivem Resultat in Schritt 432 ist die gemessene Viskosität des Mediums zu niedrig gegenüber dem vorbestimmten Wert und wird in einem Schritt 437 die Temperatur des Mediums verringert mit einem Sprung zu Schritt 428 zur Temperaturregelung des Mediums. Ergibt jedoch die Abfrage 431, dass die Viskosität innerhalb des vorgegebenen Bereichs liegt, so wird in einem daran anschließenden Schritt 434 eine Abfrage durchgeführt, ob die erfassten Parameter, d.h. Druck, Viskosität, Temperatur und Durchflussvolumen des Mediums innerhalb der Prüfmessstrecke stabil bzw. konstant sind. Bei negativem Resultat erfolgt in einem Schritt 435 eine Korrektur der Toleranzen der Parameter, worauf in einem Datenübergabeschritt 436 diese Parameter zur nachfolgenden Übergabe an die Applikationstabelle 410 bereitgestellt werden. Bei positivem Resultat der Abfrage 434 erfolgt eine Bereitmeldung 437, mit welcher der Block 420 abgeschlossen ist. Danach erfolgt ein Übergang in einen Kalibrierungsblock 450, in welchem mit dem Kalibrierungsstart 440' die Schritte 323 bis 336 analog zu dem Flussdiagramm 300 von Fig. 6 durchgeführt werden, wobei gleiche Bezugszeichen wie in Fig. 6 gleiche oder ähnliche Verfahrensschritte bezeichnen. Dabei werden die Messdaten in beiden Messstrecken gleichzeitig, jedoch getrennt voneinander erfasst und ausgewertet. Wenn für die Kalibrierung bei hoher Temperatur die optionale Wiegeprozedur ausgewählt wird, so wird die Durchflussmenge des durch beide Messstrecken durchfließenden Mediums nach jeweils einem vorbestimmten Messzyklus automatisch gewogen und mit dem etwa zeitgleich ermittelten Resultat für die erfasste Durchflussmenge in beiden Messstrecken verglichen. Die Messunsicherheit der Referenzmessstrecke wird mit jener der Prüfmessstrecke verglichen, wobei praktisch gleichzeitig festgestellt wird, ob der Unsicherheitsanteil die zulässige Grenze von 1/5 der Messtoleranz überschreitet. Das Resultat der Kalibrierung wird tabellarisch gemäß Schritt 333 und als Vergleichgraphik gemäß Schritt 334 angezeigt und ist in einem Schritt 335 als Protokoll ausgebbar. In einem sich an den Berechnungsschritt 332 anschließenden Schritt 332' werden Korrekturwerte in den Messdaten für die Prüfmessstrecke ermittelt und sodann in einem Schritt 336 zur Datenübergabe für andere Unterprogrammblöcke bereitgestellt.

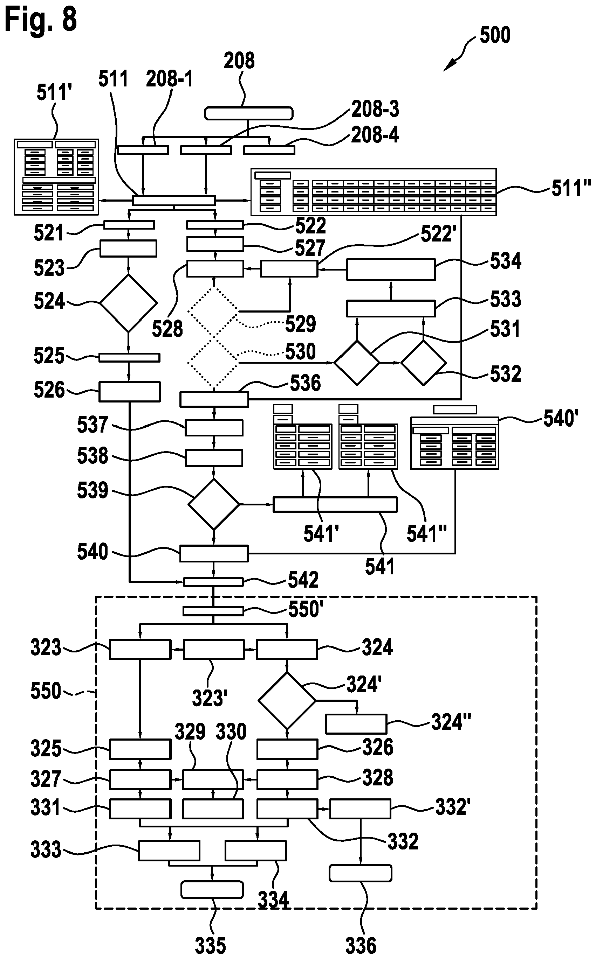

Fig. 8 zeigt ein Flussdiagramm 500, das den Verfahrensablauf veranschaulicht, wenn in Block 208' des Hauptprogramms von Fig. 5 anhand des Auswahlfensters 208-3 die Korrektur-Betriebsart eingestellt ist, die beispielsweise zum Nachkalibrieren eines Durchflussmessers oder zum Kalibrieren für einen außerhalb bisher ermittelter Daten liegenden Messbereich dient. In Schritt 511 wird eine Parametertabelle 511 angelegt, wobei Datensätze für die Parametertabelle 511 beispielsweise aus einer herstellerspezifischen Datentabelle 511' für den Prüfling übernommen werden können oder aus einer Datenbank 511", um den Prüfling in einem neuen Messbereich zu kalibrieren oder Korrekturen an bisherigen Datensätzen vorzunehmen. Danach wird einerseits in Schritt 521 die Referenzmessstrecke und andererseits parallel dazu in Schritt 522 die Prüfmessstrecke mit dem zu kalibrierenden Prüfling in Messbereitschaft versetzt. Die Referenzmessstrecke wird mit diesen Parametern aus der Parametertabelle 511 in Schritt 523 aktiviert, d.h. die Steuereinrichtung nimmt laufend von den Sensoren der Referenzmessstrecke erfasste Messwerte auf; worauf gemäß dem folgenden Schritt 524 eine Abfrage erfolgt, ob die erfassten Parameter, d.h. Druck, Viskosität, Temperatur und Durchflussvolumen des Mediums innerhalb der Referenzmessstrecke konstant sind. Ist das Resultat positiv, so erfolgt in einem Schritt 525 eine Bereitmeldung, die anzeigt, dass die Referenzmessstrecke innerhalb vorbestimmter Toleranzgrenzen in einem stabilen Betriebszustand ist. Danach erfolgt eine Warteschleife 526, die solange andauert, bis auch für die Prüfmessstrecke ein Bereitmeldung vorliegt. Währenddessen wird die Prüfmessstrecke auf den Parametersatz der Parametertabelle 511 eingeregelt, wobei nach dem Schritt 522 gemäß dem folgenden Schritt 527 die Prüfmessstrecke befüllt und in Schritt 528 das Medium geheizt wird. Darauf wird im anschließenden Schritt 529 geprüft, ob die vorbestimmte Temperatur gemäß dem Parametersatz erreicht ist. Bei negativem Resultat in Schritt 529 erfolgt in einem Schritt 522' eine Ausregelung des Toleranzbereichs mit anschließendem Sprung zu Schritt 528. Ist das Resultat der Abfrage in Schritt 529 positiv, so wird in einer weiteren Abfrage 530 geprüft, ob die vorbestimmte Viskosität gemäß dem Parametersatz erreicht ist. Ergibt die Abfrage in Schritt 530 ein negatives Resultat, so wird in einer anschließenden Abfrage 531 geprüft, ob die gemessene Viskosität zu hoch gegenüber dem vorbestimmten Wert ist. Ist das Resultat der Abfrage 531 negativ, so wird in einer weiteren Abfrage 532 geprüft, ob die gemessene Viskosität zu niedrig gegenüber dem vorbestimmten Wert ist. Ist das Resultat der Abfragen 531 und/oder 532 positiv, so wird in Schritt 533 ermittelt, ob entweder eine falsche Temperatur oder ein falsches Medium vorliegt; in einem anschließendem Regelungsschritt 534 wird die Temperatur nach Maßgabe der Viskosität geregelt. Nach der Regelung 534 folgt in Schritt 522' eine Ausregelung des Toleranzbereichs und anschließend ein Sprung zu Schritt 528. Ergibt hingegen die Abfrage 530 ein positives Resultat, so wird in einem Schritt 536 die erfasste Temperatur und die Viskosität in der Parametertabelle 511" abgespeichert. Danach wird in Schritt 537 der Prüfdruck eingeregelt, im anschließenden Schritt 538 die Durchflussmenge gemessen und im darauf folgenden Abfrageschritt 539 geprüft, ob diese Durchflussmenge innerhalb eines vorbestimmten Toleranzbereichs gemäß der Datenbank 511' oder 511" liegt. Bei einem negativen Resultat in Schritt 539 wird der Systemdruck stufenweise solange verringert oder erhöht, bis die Toleranzgrenze erreicht ist, wobei die jeweiligen Extremwerte in Tabellen 541' bzw. 541" abgelegt werden. Bei positivem Resultat in Schritt 539 wird der eingeregelte Prüf- bzw. Systemdruck zusammen mit den zugeordneten Werten des eingestellten Parametersatzes in einer die Kerndaten des zu kalibrierenden Prüflings bildenden Messtabelle 540' zur Verwendung in der Parametertabelle 541" abgelegt. Danach erfolgt in Schritt 542 die Bereitmeldung für die Prüfmessstrecke. Im Anschluss daran erfolgt in Block 550 der Start 550' der eigentlichen Kalibrierprozedur, die mit den Schritten 323 bis 336 im Wesentlichen identisch zu Block 450 von Fig. 7 abläuft, wobei gleiche Bezugszeichen gleiche oder ähnliche Verfahrensschritte bezeichnen.

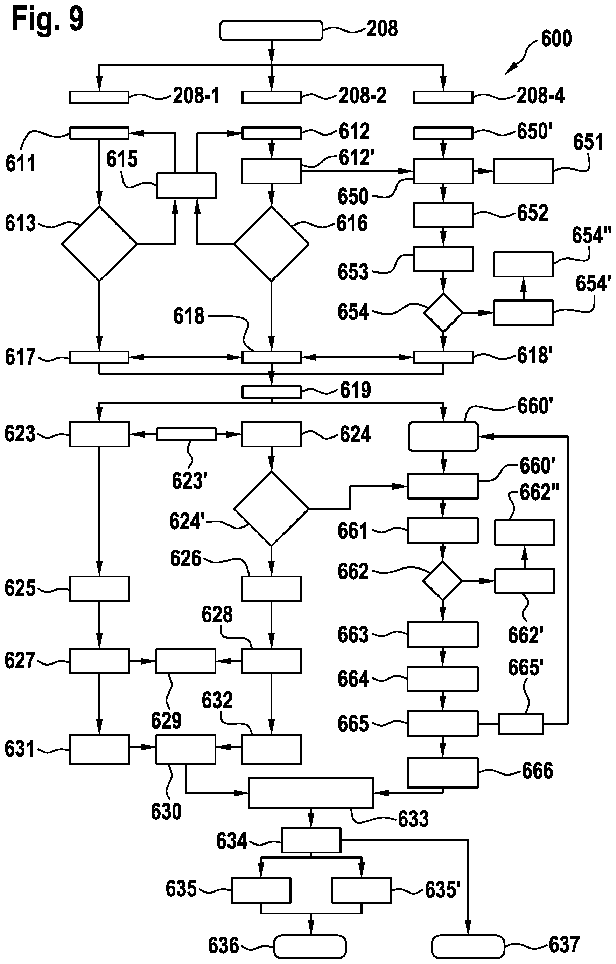

Fig. 9 zeigt ein Flussdiagramm 600, das den Verfahrensablauf veranschaulicht, wenn in Block 208' von Fig. 5 anhand des Auswahlfensters 208-4 die Betriebsart zur Massebestimmung der Durchflussmenge eingestellt ist. Praktisch gleichzeitig werden mit Schritt 611 die Referenzmessstrecke und parallel dazu mit Schritt 612 die Prüfmessstrecke sowie mit Schritt 650' der Wiegebehälter mit Wiegezellen 142 und Füllstandsmelder in Messbereitschaft versetzt. An den Schritt 611 schließt sich ein Abfrageschritt 613 an, worin eine Abfrage erfolgt, ob die erfassten Parameter, d.h. Druck, Viskosität, Temperatur und Durchflussvolumen des Mediums innerhalb der Referenzmessstrecke konstant sind. Ist das Resultat der Abfrage 613 negativ, so wird in Schritt 615 die Referenzmessstrecke befüllt, worauf ein Rücksprung zu Schritt 611 erfolgt, während bei positivem Resultat der Abfrage 613 eine Bereitmeldung 617 erfolgt. Für die Prüfmessstrecke schließt sich an den Schritt 612 ein Zwischenschritt 612' zum Befüllen der Prüfmessstrecke an. Im Anschluss an den Zwischenschritt 612' erfolgt einerseits ein Übergang zu einem Abfrageschritt 616 und andererseits durch Übergang zu Schritt 650. In dem Abfrageschritt 616 erfolgt eine Abfrage, ob die erfassten Parameter, d.h. Druck, Viskosität, Temperatur und Durchflussvolumen des Mediums innerhalb der Prüfmessstrecke konstant sind. Ist das Resultat der Abfrage 616 negativ, so wird in Schritt 615 die Referenzmessstrecke befüllt, worauf ein Rücksprung zu Schritt 612 erfolgt, während bei positivem Resultat der Abfrage 616 eine Bereitmeldung 618 für die Prüfmessstrecke erfolgt. Währenddessen erfolgt für den Wiegebehälter, welcher seit Schritt 650' in Messbereitschaft versetzt ist, ein Übergang zu Schritt 650, wenn die Prüfmessstrecke gemäß Schritt 612' mit dem Medium gefüllt ist, worauf die zum Wiegebehälter 140 führende Teilstrecke freigegeben und der Wiegebehälter 140 mit dem Medium gefüllt wird, um den Wiegebehälter mit Wiegezellen und Füllstandsmelder gemäß Schritt 651 einem Funktionstest zu unterziehen. Danach wird in einem weiteren Schritt 652 die Waage bzw. der Wiegebehälter geleert, um eine Nullpunktjustierung gemäß Schritt 653 vorzunehmen. In einem sich daran anschließenden Abfrageschritt 654 wird überprüft, ob die Waage bzw. der Wiegebehälter in einem ordnungsgemäßen Funktionszustand ist. Bei negativem Resultat wird in einem Schritt 654' die Waage überprüft und in Schritt 654" instand gesetzt. Bei positivem Resultat in Schritt 654 erfolgt eine Bereitmeldung 618'. Liegt aus den Abfrageschritten 613 und 616 sowie 654 jeweils ein positives Resultat anhand der Bereitmeldungen 617 und 618 sowie 618' vor, so wird in einem anschließenden Schritt 619 die Kalibrierung gestartet. Nach Starten 619 der Kalibrierung werden sowohl in einem Schritt 623 für die Referenzmessstrecke die Anzahl der Referenzmessdaten als auch in einem Schritt 624 für die Prüfmessstrecke die Anzahl der Prüfmessdaten festgelegt, beispielsweise jeweils 50 Messungen für einen Messzyklus. Zugleich wird in einem gemeinsamen Schritt 623' die Anzahl der durchzuführenden Messzyklen für beide Messstrecken festgelegt. An den Schritt 623 schließt sich der Schritt 625 an, mit welchem die Messdaten für die Referenzmessstrecke erfasst werden. Parallel dazu schließt sich an den Schritt 624 für die Prüfmessstrecke ein Zwischenschritt 624' an, worin eine Abfrage erfolgt, ob für die während des anstehenden Messzyklus zu messende Durchflussmenge eine vergleichende Massebestimmung durch Wiegen durchgeführt werden soll. Wird die Abfrage 624' negativ beantwortet, so wird unmittelbar in Schritt 626 die Datenerfassung für die Prüfmessstrecke gestartet. Bei positiv beantworteter Abfrage 624' wird mit Schritt 660 der Wiegevorgang für den laufenden Messzyklus gestartet und durchläuft sequentiell die Schritte 661 bis 666. Ist die jeweilige Messdatenerfassung sowohl in Schritt 625 als auch in Schritt 626 beendet, so folgen einerseits auf den Schritt 625 ein Auswerteschritt 627 und andererseits auf den Schritt 626 ein Auswerteschritt 628 an, worin jeweils die entsprechenden Messdaten für den laufenden Messzyklus ausgewertet werden. Ein Datenaustauschmodul 629, das sowohl mit dem Auswerteschritt 627 für die Referenzmessstrecke als auch mit dem Auswerteschritt 628 für die Prüfmessstrecke korrespondiert, berechnet eventuell vorhandene Differenzen aus beiden Datensätzen. Sind die jeweiligen Datensätze in Auswertungsschritt 627 und Auswertungsschritt 628 ausgewertet und die Differenzen in Schritt 629 berechnet, so schließt sich an Schritt 627 ein Berechnungsschritt 631 an, während sich an den Schritt 628 ein Berechnungsschritt 632 anschließt, worin jeweils die Messunsicherheit für die jeweiligen Messdatensätze berechnet wird. Ein Datenaustauschmodul 630, das sowohl mit Schritt 631 als auch Schritt 632 korrespondiert, prüft sich aus dem Vergleich der beiden Messunsicherheiten ergebende Toleranzen. Nach erfolgter Prüfung wird in einem darauf folgenden Schritt 633 die Gesamtmessunsicherheit der Referenzmessstrecke berechnet, indem das Resultat des Wiegevorgangs gemäß den Schritten 661 bis 666 als Vergleichsmaßstab zugrundegelegt wird, da mittels Wiegen des Durchflussvolumens eine präzisere Messung erzielbar ist als dies mit einem Durchflussmesser typischerweise möglich ist. Im Einzelnen gestaltet sich der Wiegevorgang in den Schritten wie folgt: Der Start des Wiegevorgangs setzt in Schritt 660 ein mit der Initialisierung durch Schritt 624', also wenn die Prüfmessstrecke mit dem Medium gefüllt ist. Anschließend wird die Waage bzw. der Wiegebehälter gemäß Schritt 661 gefüllt, worauf in einem Abfrageschritt 662 geprüft wird, ob die Temperatur des Mediums innerhalb eines vorbestimmten Bereichs ist. Ist die Temperatur außerhalb des vorbestimmten Bereichs, so wird in Schritt 662' ein Fehler detektiert und die Kühlung des Mediums mittels eines Wärmetauschers eingeleitet, worauf in Schritt 662" die Waage 140 geleert wird. Ist jedoch die Temperatur innerhalb des vorbestimmten Bereichs, so beginnt der eigentliche Wiegevorgang in Schritt 663, worauf die von den Wiegezellen und dem Füllstandsmelder des Wiegebehälters 140 gewonnenen Messdaten gemäß Schritt 664 erfasst und ausgewertet werden. Danach wird in Schritt 665 die Waage bzw. der Wiegebehälter geleert, worauf mit Schritt 665' ein nächster Messzyklus generiert wird mit einem Rücksprung zu Schritt 660'. Für den gerade durchgeführten Messzyklus wird in einem Berechnungsschritt 666 die Messunsicherheit berechnet. Das Resultat wird dann in den Rechenschritt 633 übergeben und geht dort in die Berechnung der Gesamtmessunsicherheit ein. Danach werden in einem darauf folgenden Schritt 634 die Korrekturwerte in den Messwerten ermittelt, welche während des gerade durchgeführten Messzyklus in der Referenz- und Prüfmessstrecke gewonnen wurden. Das Resultat wird zeitlich parallel einerseits in Anzeigeschritt 635 tabellarisch und andererseits in Anzeigeschritt 635' graphisch dargestellt. In einem darauf folgenden Protokollierungsschritt 636 sind die Messdaten aus den Schritten 635, 635' als Protokoll ausgebbar. Zudem werden in einem sich auf dem Berechnungsschritt 634 basierenden Schritt 667 die in den Messdaten für die Prüfstrecke ermittelten Korrekturwerte zur Datenübergabe an eine für alle Programmsegmente verfügbare Datenbank bereitgestellt.

**Patentansprüche**

1. Verfahren zum Kalibrieren von Durchflussmessern für fluide Medien mit folgenden Schritten:

   - Durchleiten eines fluiden Mediums durch eine Referenzmessstrecke (101-1) und eine einen zu kalibrierenden Durchflussmesser (125) aufweisende Prüfmessstrecke (101-2),
   - Einstellen von zumindest annähernd identischen und konstanten Druck- und Strömungsbedingungen für das fluide Medium in beiden Messstrecken (101-1, 101-2),
   - Erfassen eines Referenzdurchflusses des fluiden Mediums durch die Referenzmessstrecke (101-1) und von zeitlich dazu korrespondierenden Durchflusswerten, welche von dem zu kalibrierenden Durchflussmesser (125) der Prüfmessstrecke (101-2) bei einer voreingestellten Medientemperatur gemessen werden,
   - Vergleichen des erfassten Referenzdurchflusses durch die Referenzmessstrecke (101-1) mit den dazu zeitlich korrespondierenden Durchflusswerten des zu kalibrierenden Durchflussmessers (125), um darauf basierend wenigstens einen Korrekturwert für die Kalibrierung des Durchflussmessers (125) bei der voreingestellten Medientemperatur zu ermitteln, **gekennzeichnet durch**

- Bestimmen des jeweiligen Korrekturwerts für den Durchflussmesser (125) für unterschiedliche Medientemperaturen des fluiden Mediums, um anhand der temperaturabhängigen Korrekturwerte als Stützstellen eine Kalibrierfunktion zu ermitteln, wobei das fluide Medium umschaltbar aus einem Vorratstank (103) oder aus einem Kreislaufbehälter (152) als geschlossenem Tank zur Referenzmessstrecke (101-1) und Prüfmessstrecke (101-2) gefördert wird, wobei die Umschaltung auf den Kreislaufbehälter (152) aus Sicherheitsgründen dann erfolgt, wenn die Messstrecken (101-1, 101-2) bei höheren Temperaturen betrieben werden.

**2.** Verfahren nach Anspruch 1, **dadurch gekennzeichnet, dass** das fluide Medium auf die voreingestellte Medientemperatur vor dessen Eintritt in die Prüfmessstrecke (101-2) erwärmt wird, wobei die Medientemperatur während einer laufenden Messreihe innerhalb der Prüfmessstrecke (101-2) konstant gehalten wird.

**3.** Verfahren nach Anspruch 1, **dadurch gekennzeichnet, dass** das fluide Medium vor dessen Eintritt in die Referenzmessstrecke (101-1) auf die vorbestimmte Medientemperatur erwärmt wird, wobei die Medientemperatur während einer laufenden Messreihe innerhalb der Referenzmessstrecke (101-1) und Prüfmessstrecke (101-2) konstant gehalten wird.

**4.** Verfahren nach einem der Ansprüche 1 bis 3, **dadurch gekennzeichnet, dass** zum Erfassen einer gesamten Durchflussmenge ein während eines Messvorgangs durch die Referenzmessstrecke (101-1) und die Prüfmessstrecke (101-2) durchgegangenes Volumen des fluiden Mediums durch Wiegen bestimmt wird.

**5.** Verfahren nach einem der Ansprüche 1 bis 4, **dadurch gekennzeichnet, dass** der Korrekturfaktor $k_T$ für eine vorbestimmte Medientemperatur T bei einer vorgegebenen Viskosität des Mediums anhand der nachstehenden Gleichung ermittelt wird:

$$k_T = Q_{Soll} - Q \,,$$

wobei mit $Q_{Soll}$ eine Sollwert-Durchflussmenge und mit Q der Mittelwert von mehreren zeitlich aufeinanderfolgend mittels des zu kalibrierenden Durchflussmessers (125) erfassten Durchflussmengenmesswerten bezeichnet sind.

**6.** Verfahren nach einem der Ansprüche 1 bis 4, **dadurch gekennzeichnet, dass** der Korrekturwert für eine vorbestimmte Medientemperatur T anhand der nachstehenden Gleichung ermittelt wird:

$$k_T = Q_{Soll} - Q_{Master} - Q_{Waage} + Q_{Kal} \,,$$

wobei mit $Q_{Soll}$ das zu messende Durchflussvolumen, mit $Q_{Master}$ der jeweilige Mittelwert des in der Referenzmessstrecke (101-1) gemessenen Durchflussvolumens, mit $Q_{Waage}$ der jeweilige Mittelwert des durch Wiegen ermittelten Durchflussvolumens, mit $Q_{Kal}$ das mittlere Durchflussvolumen in der Prüfmessstrecke (101-2) und mit $k_T$ der Korrekturwert bei einem Durchfluss eines vorbestimmten Durchflussvolumens bezeichnet sind.

**7.** Verfahren nach Anspruch 6, **dadurch gekennzeichnet, dass** auf der Basis des ermittelten Korrekturwert $k_T$ eine Messunsicherheit für den zu kalibrierenden Durchflussmesser (125) anhand der nachfolgenden Gleichung ermittelt wird:

$$\pm u = 0.5 * \sqrt{k_T^{\,2} + \sum_{j=1}^{l} c_j^{\,2}} \,,$$

wobei mit $\pm u$ die Messunsicherheit und mit $k_T$ der Korrekturwert bei einer vorbestimmten Medientemperatur T bezeichnet sind, während mit den Variablen $c_j$ systematische Messfehlerquellen unterschiedlichen Ursprungs bezeichnet sind, wobei mit j der Laufindex der jeweiligen Variablen und mit I die Anzahl der zu berücksichtigenden Variablen bezeichnet sind.

**8.** Kalibriervorrichtung zum Durchführen des Verfahrens nach einem der Ansprüche 1 bis 7, **dadurch gekennzeichnet, dass** die Kalibriervorrichtung eine Referenzmessstrecke (101-1) und eine Prüfmessstrecke (101-2) für einen zu kalibrierenden Durchflussmesser (125) aufweist, mit Mitteln (112, 130) zum Einstellen von zumindest annähernd identischen und konstanten Druck- und Strömungsbedingungen für das fluide Medium in beiden Messstrecken, mit Mitteln (115, 116, 125) zum Erfassen eines Referenzdurchflusses des fluiden Mediums durch die Referenzmessstrecke (101-1) und von zeitlich dazu korrespondierenden Durchflusswerten durch die Prüfmessstrecke (101-2) bei einer voreingestellten Medientemperatur, mit Mitteln (195, 198) zum Vergleichen des erfassten Referenzdurchflusses durch die Referenzmessstrecke (101-1) mit den dazu zeitlich korrespondierenden Durchflusswerten des zu kalibrierenden Durchflussmessers (125), um darauf basierend wenigstens einen Korrekturwert für die Kalibrierung des Durchflussmessers (125) bei der voreingestellten Medientemperatur zu ermitteln, mit Mitteln (195, 198) zum Bestimmen des jeweiligen Korrekturwerts für den Durchflussmesser (125) für unterschiedliche Medientemperaturen des fluiden Mediums, um anhand der temperaturabhängigen Korrekturwerte als Stützstellen eine Kalibrierfunktion zu ermitteln, und mit Mitteln (104, 155) zum umschaltbaren Fördern des fluiden Mediums (102) aus einem Vorratstank (103) oder aus einem als geschlossener Tank ausgebildetem Kreislaufbehälter (152) zur Referenzmessstrecke (101-1) und Prüfmessstrecke (101-2), wobei die Umschaltung auf den Kreislaufbehälter (152) aus Sicherheitsgründen dann erfolgt, wenn die Messstrecken (101-1, 101-2) bei höheren Temperaturen betrieben werden.

9. Kalibriervorrichtung nach Anspruch 8, **dadurch gekennzeichnet, dass** die Prüfmessstrecke (101-2) der Referenzmessstrecke (101-1) in Strömungsrichtung des fluiden Mediums (102) nachgeordnet ist.

10. Kalibriervorrichtung nach Anspruch 8 oder 9, **dadurch gekennzeichnet, dass** in Strömungsrichtung zwischen der Referenzmessstrecke (101-1) und der nachgeordneten Prüfmessstrecke (101-2) Mittel (118, 118') zum Erwärmen des fluiden Mediums (102) angeordnet sind.

11. Kalibriervorrichtung nach Anspruch 10, **dadurch gekennzeichnet, dass** die Mittel (118, 118') zum Erwärmen des fluiden Mediums wenigstens einen Wärmetauscher (118) und ein zugeordnetes Temperiergerät (118') aufweisen.

12. Kalibriervorrichtung nach Anspruch 8 bis 11, **dadurch gekennzeichnet, dass** der Prüfmessstrecke (101-2) in Strömungsrichtung des fluiden Mediums Mittel (109-2, 109-4, 132, 134, 135, 140 - 143) zum Wiegen der während einer Messreihe durch die Referenzmessstrecke (101-1) und die Prüfmessstrecke (101-2) durchgeströmten Durchflussmenge nachgeordnet sind.

13. Kalibriervorrichtung nach Anspruch 12, **dadurch gekennzeichnet, dass** die Mittel zum Wiegen einen Wiegebehälter (140) zum Aufnehmen des aus der Prüfmessstrecke (101-2) austretenden Mediums (102) umfassen, wobei der Wiegebehälter (140) über wenigstens eine Leitung (101, 109-2, 109-4) mit einem Ausgang der Prüfmessstrecke (101-2) fluidisch koppelbar ist und der Wiegebehälter (140) wenigstens eine Wiegemesszelle (142) aufweist, welche zum Wiegen des im Wiegebehälter (140) aufgenommenen Mediums dient.

14. Kalibriervorrichtung nach Anspruch 12 oder 13, **dadurch gekennzeichnet, dass** wenigstens ein Schaltventil (135) vorgesehen ist, welches dem Ausgang der Prüfmessstrecke (101-2) abströmseitig nachgeordnet ist, um in einer ersten Ventilschaltstellung das aus der Prüfmessstrecke (101-2) austretende Medium in den Wiegebehälter (140) zu leiten und in einer zweiten Ventilschaltstellung das Medium (102) in einen Vorratstank (103) zurückzuführen.

15. Kalibriervorrichtung nach einem der Ansprüche 8 bis 14, **dadurch gekennzeichnet, dass** zum Ein- und/oder Auswechseln eines Durchflussmessers (125) zwischen Referenzmessstrecke (101-1) und Prüfmessstrecke (101-2) wenigstens ein Schaltventil (119) angeordnet ist, das in einer ersten Ventilschaltstellung die Referenzmessstrecke (101-1) mit der Prüfmessstrecke (101-2) fluidisch verbindet und in einer zweiten Ventilschaltstellung die Prüfmessstrecke (101-2) von der Referenzmessstrecke (101-1) fluidisch abtrennt.

16. Kalibriervorrichtung nach einem der vorstehenden Ansprüche 8 bis 15, **dadurch gekennzeichnet, dass** in der Referenzmessstrecke (101-1) und in der Prüfmessstrecke (101-2) jeweils Sensoren (110, 111, 113, 117; 119'; 120, 121, 123, 127) angeordnet sind, um physikalische Messgrößen des fluiden Mediums (102) zumindest anhand von Druck, Temperatur, und Viskosität zu erfassen.

17. Kalibriervorrichtung nach einem der vorstehenden Ansprüche 8 bis 16, **dadurch gekennzeichnet, dass** ein Vorratstank (103) zur Aufnahme des fluiden Mediums (102) und wenigstens eine Pumpe (104) vorgesehen sind, wobei die wenigstens eine Pumpe (104) während des Kalibrierbetriebs das fluide Medium (102) durch die Referenzmessstrecke (101-1) und die in Strömungsrichtung nachgeordnete Prüfmessstrecke (101-2) fördert.

18. Kalibriervorrichtung nach einem der vorstehenden Ansprüche 8 bis 17, **dadurch gekennzeichnet, dass** sowohl in der Referenzmessstrecke (101-1) als auch in der Prüfmessstrecke (101-2) jeweils wenigstens ein Strömungsgleichrichter (112, 122) vorgesehen ist.

19. Kalibriervorrichtung nach einem der Ansprüche 8 bis 11, **dadurch gekennzeichnet, dass** in der Referenzmessstrecke (101-1) wenigstens zwei Durchflussmesser (115, 116) in Strömungsrichtung hintereinander angeordnet sind.

20. Kalibriervorrichtung nach einem der vorstehenden Ansprüche 8 bis 19, **dadurch gekennzeichnet, dass** die Referenzmessstrecke (101-1) einen in einem Zylinder (166) verschieblich aufgenommenen Arbeitskolben (165) aufweist, welcher dazu dient, bei Ausführung seines Arbeitshubs einen konstant gleichmäßigen Volumenstrom des fluiden Mediums (102) in der Referenzmessstrecke (101-1) zu erzeugen.

21. Kalibriervorrichtung nach einem der Ansprüche 8 bis 20, **dadurch gekennzeichnet, dass** die Referenzmessstrecke (101-2) als mobile Baugruppe (197) ausgebildet ist, die mit einer Kalibrierung anhand zumindest eines Kalibrier-Datensatzes (193, 194, 199) versehen ist, wobei der zumindest eine Kalibrier-Datensatz (193, 194, 199) wenigstens einen Korrekturwert zur Referenzfunktion der Baugruppe (197) bereitstellt.

**Claims**

1. Method for calibrating flow meters for fluid media having the following steps:

   - conducting a fluid medium through a reference measurement section (101-1) and a test measurement section (101-2), having a flow meter (125) to be calibrated,
   - setting at least approximately identical and constant pressure and flow conditions for the fluid medium in both measurement sections (101-1, 101-2),
   - detecting a reference flow of the fluid medium through the reference measurement section (101-1) and flow values corresponding chronologically thereto, which are measured by the flow meter (125) to be calibrated of the test measurement section (101-2) at a preset media temperature,
   - comparing the detected reference flow through the reference measurement section (101-1) to the flow values corresponding chronologically thereto of the flow meter (125) to be calibrated, to ascertain at least one correction value for the calibration of the flow meter (125) at the preset media temperature based thereon, **characterized by**
   - determining the respective correction value for the flow meter (125) for different media temperatures of the fluid medium, to ascertain a calibration function on the basis of the temperature-dependent correction values as support points, wherein the fluid medium is conveyed in a switchable manner from storage tank (103) or from a circulation container (152) as a closed tank to the reference measurement section (101-1) and the test measurement section (101-2), wherein, for safety reasons, the switching to the circulation container (152) takes place when the measurements sections (101-1, 101-2) are operated at higher temeratures.

2. Method according to Claim 1, **characterized in that** the fluid medium is heated to the preset media temperature before it enters the test measurement section (101-2), wherein the media temperature is kept constant during a running measurement series within the test measurement section (101-2).

3. Method according to Claim 1, **characterized in that** the fluid medium is heated to the predetermined temperature before it enters the reference measurement section (101-1), wherein the media temperature is kept constant during a running measurement series within the reference measurement section (101-1) and test measurement section (101-2) .

4. Method according to any one of Claims 1 to 3, **characterized in that**, to detect a total flow rate, a volume of the fluid medium which passes through the reference measurement section (101-1) and the test measurement section (101-2) during a measurement procedure is determined by weighing.

5. Method according to any one of Claims 1 to 4, **characterized in that** the correction factor $k_T$ for a predetermined media temperature T at a predefined viscosity of the medium is ascertained on the basis of the following equation:

$$k_T = Q_{setpoint} - Q,$$

wherein $Q_{setpoint}$ denotes a setpoint flow rate and Q denotes the mean value of multiple flow rate measured values detected in chronological succession by means of the flow meter (125) to be calibrated.

6. Method according to any one of Claims 1 to 4, **characterized in that** the correction value is ascertained for a predetermined media temperature T on the basis of the following equation:

$$k_T = Q_{setpoint} - Q_{master} - Q_{weighed} + Q_{cal},$$

wherein $Q_{setpoint}$ denotes the flow volume to be measured, $Q_{master}$ denotes the respective mean value of the flow volume ascertained in the reference measurement section (101-1), $Q_{weighed}$ denotes the respective mean value of the flow volume measured by weighing, $Q_{cal}$ denotes the mean flow volume in the test measurement section (101-2), and $k_T$ denotes the correction value during a flow of a predetermined flow volume.

7. Method according to Claim 6, **characterized in that** a measurement uncertainty for the flow meter (125) to be calibrated can be ascertained with reference to the following equation on the basis of the ascertained correction value $k_T$:

$$\pm u = 0.5 * \sqrt{k_T^2 + \sum_{j=l}^{l} c_j^2}$$

wherein $\pm u$ denotes the measurement uncertainty and $k_T$ denotes the correction value at a predetermined media temperature T, while systematic measurement deviations of different origins are denoted by the variables $c_j$, wherein j denotes the running index of the respective variables and 1 denotes the number of the variables to be considered.

8. Calibration device for carrying out the method according to any one of Claims 1 to 7, **characterized in that** the calibration device has a reference measurement section (101-1) and a test measurement section (101-2) for a flow meter (125) to be calibrated, having means (112, 130) for setting at least approximately identical and constant pressure and flow conditions for the fluid medium in both measurement sections, having means (115, 116, 125) for detecting a reference flow of the fluid medium through the reference measurement section (101-1) and flow values corresponding chronologically thereto through the test measurement section (101-2) at a preset media temperature, having means (195, 198) for comparing the detected reference flow through the reference measurement section (101-1) to the flow values corresponding chronologically thereto of the flow meter (125) to be calibrated, to ascertain at least one correction value based thereon for the calibration of the flow meter (125) at the preset media temperature, having means (195, 198) for determining the respective correction value for the flow meter (125) for different media temperatures of the fluid medium, to ascertain a calibration function on the basis of the temperature-dependent correction values as support points, and having means (104, 155) for the switchable conveyance of the fluid medium (102) from a storage tank (103) or from a circulation container (152), which is designed as a closed tank, to the reference measurement section (101-1) and test measurement section (101-2), wherein, for safety reasons, the switching to the circulation container (152) takes place when the measurement sections (101-1, 101-2) are operated at higher temperatures.

9. Calibration device according to Claim 8, **characterized in that** the test measurement section (101-2) is downstream of the reference measurement section (101-1) in the flow direction of the fluid medium (102).

10. Calibration device according to Claim 8 or 9, **characterized in that** means (118, 118') for heating the fluid medium (102) are arranged in the flow direction between the reference measurement section (101-1) and the downstream test measurement section (101-2).

11. Calibration device according to Claim 10, **characterized in that** the means (118, 118') for heating the fluid medium have at least one heat exchanger (118) and an associated temperature control device (118').

12. Calibration device according to any one of Claims 8 to 11, **characterized in that** the means (109-2, 109-4, 132, 134, 135, 140-143) for weighing the flow rate which flows through the reference measurement section (101-1) and the test measurement section (101-2) during a measurement series are downstream of the test measurement section (101-2) in the flow direction of the fluid medium.

13. Calibration device according to Claim 12, **characterized in that** the means for weighing comprise a weighing container (140) for accommodating the medium (102) exiting from the test measurement section (101-2), wherein the weighing container (140) can be fluidically coupled via at least one line (101, 109-2, 109-4) to an outlet of the test measurement section (101-2) and the weighing container (140) has at least one weighing measurement cell (142), which is used for weighing the medium accommodated in the weighing container (140).

14. Calibration device according to Claim 12 or 13, **characterized in that** at least one switching valve (135) is provided, which is downstream of the outlet of the test measurement section (101-2) on the outflow side, to conduct the medium exiting from the test measurement section (101-2) into the weighing container (140) in a first valve switch position and to return the medium (102) into a storage tank (103) in a second valve switch position.

15. Calibration device according to any one of Claims 8 to 14, **characterized in that**, for the exchange and/or replacement of a flow meter (125), at least one switching valve (119) is arranged between reference measurement section (101-1) and test measurement section (101-2), which fluidically connects the reference measurement section (101-1) to the test measurement section (101-2) in a first valve switch position and fluidically disconnects the test measurement section (101-2) from the reference measurement section (101-1) in a second valve switch position.

16. Calibration device according to any one of preceding Claims 8 to 15, **characterized in that** sensors (110, 111, 113, 117; 119'; 120, 121, 123, 127) are arranged in each case in the reference measurement section (101-1) and in the test measurement section (101-2) to detect physical measured variables of the fluid medium (102) at least on the basis of pressure, temperature, and viscosity.

17. Calibration device according to any one of preceding Claims 8 to 16, **characterized in that** a storage tank (103) for accommodating the fluid medium (102) and at least one pump (104) are provided, wherein the at least one pump (104) conveys the fluid medium (102) during the calibration operation through the reference measurement section (101-1) and the test measurement section (101-2), which is downstream in the flow direction.

18. Calibration device according to any one of preceding Claims 8 to 17, **characterized in that** at least one flow rectifier (112, 122) is provided in each case both in the reference measurement section (101-1) and also in the test measurement section (101-2).

19. Calibration device according to any one of Claims 8 to 11, **characterized in that** at least two flow meters (115, 116) are arranged in succession in the flow direction in the reference measurement section (101-1).

20. Calibration device according to any one of preceding Claims 8 to 19, **characterized in that** the reference measurement section (101-1) has an operating piston (165), which is accommodated so it is displaceable in a cylinder (166), and which is used to generate a constant, uniform volume stream of the fluid medium (102) in the reference measurement section (101-1) during execution of its operating stroke.

21. Calibration device according to any one of Claims 8 to 20, **characterized in that** the reference measurement section (101-2) is designed as a mobile module (197), which is provided with a calibration on the basis of at least one calibration data set (193, 194, 199), wherein the at least one calibration data set (193, 194, 199) provides at least one correction value for the reference function of the module (197).

**Revendications**

1. Procédé d'étalonnage de débitmètres pour des milieux fluides, comprenant les étapes suivantes :

   - faire passer un milieu fluide à travers une section de mesure de référence (101-1) et une section de mesure de contrôle (101-2) possédant un débitmètre (125) à étalonner,
   - régler des conditions de pression et d'écoulement au moins approximativement identiques et constantes pour le milieu fluide dans les deux sections de mesure (101-1, 101-2),
   - acquérir un débit de référence du milieu fluide à travers la section de mesure de référence (101-1) et des valeurs de débit correspondant à celui-ci dans le temps, lesquelles sont mesurées par le débitmètre (125) à étalonner de la section de mesure de contrôle (101-2) à une température de milieu préréglée,
- comparer le débit de référence acquis à travers la section de mesure de référence (101-1) aux valeurs de débit correspondant à celui-ci dans le temps du débitmètre (125) à étalonner afin de déterminer, en se basant sur cette comparaison, au moins une valeur de correction pour l'étalonnage du débitmètre (125) à la température de milieu préréglée,
**caractérisé par**
- déterminer la valeur de correction respective pour le débitmètre (125) pour différentes températures de fluide du milieu fluide afin de déterminer une fonction d'étalonnage à l'aide des valeurs de correction dépendantes de la température en tant que point de référence, le milieu fluide étant refoulé de manière permutable depuis un réservoir (103) ou depuis un contenant de circuit fermé (152) sous la forme d'une cuve fermée vers la section de mesure de référence (101-1) et la section de mesure de contrôle (101-2), la permutation sur le contenant de circuit fermé (152) s'effectuant pour des raisons de sécurité lorsque les sections de mesure (101-1, 101-2) fonctionnent à des températures élevées.

2. Procédé selon la revendication 1, **caractérisé en ce que** le milieu fluide est chauffé à la température de milieu préréglée avant sa pénétration dans la section de mesure de contrôle (101-2), la température de milieu étant maintenue constante à l'intérieur de la section de mesure de contrôle (101-2) pendant une série de mesures en cours.

3. Procédé selon la revendication 1, **caractérisé en ce que** le milieu fluide est chauffé à la température de milieu prédéterminée avant sa pénétration dans la section de mesure de référence (101-1), la température de milieu étant maintenue constante à l'intérieur de la section de mesure de référence (101-1) et de la section de mesure de contrôle (101-2) pendant une série de mesure en cours.

4. Procédé selon l'une des revendications 1 à 3, **caractérisé en ce que** pour acquérir un débit total, un volume du milieu fluide qui est passé à travers la section de mesure de référence (101-1) et la section de mesure de contrôle (101-2) pendant une opération de mesure est déterminé par pesage.

5. Procédé selon l'une des revendications 1 à 4, **caractérisé en ce que** le facteur de correction $k_T$ est déterminé pour une température de milieu T prédéterminée à une viscosité prédéfinie du milieu à l'aide de l'équation suivante :

$$k_T = Q_{Soll} - Q$$

où $Q_{Soll}$ désigne un débit de consigne et Q la valeur moyenne de plusieurs valeurs mesurées du débit successives dans le temps, acquises au moyen du débitmètre (125) à étalonner.

6. Procédé selon l'une des revendications 1 à 4, **caractérisé en ce que** la valeur de correction pour une température de milieu T prédéterminée est déterminée à l'aide de l'équation suivante :

$$k_T = Q_{Soll} - Q_{Master} - Q_{Waage} + Q_{Kal}$$

où $Q_{Soll}$ désigne le débit à mesurer, $Q_{Master}$ la valeur moyenne respective du débit mesuré dans la section de mesure de référence (101-1), $Q_{Waage}$ la valeur moyenne respective du débit déterminé par pesage, $Q_{Kal}$ le débit moyen dans la section de mesure de contrôle (101-2) et $k_T$ la valeur de correction avec un débit d'un débit volumique prédéterminé.

7. Procédé selon la revendication 6, **caractérisé en ce qu'**une incertitude de mesure pour le débitmètre (125) à étalonner est déterminée à l'aide de l'équation suivante en se basant sur la valeur de correction $k_T$ déterminée :

$$\pm u = 0{,}5 * \sqrt{k_T^2 + \sum_{j=1}^{l} c_j^2}$$

où $\pm u$ désigne l'incertitude de mesure et $k_T$ la valeur de correction avec une température de milieu T prédéterminée, alors que la variable $c_j$ désigne les sources d'erreur de mesure systématiques de différentes origines, j désignant l'indice courant de la variable respective et l le nombre de variables à prendre en considération.

8. Arrangement d'étalonnage destiné à mettre en oeuvre le procédé selon l'une des revendications 1 à 7, **caractérisé en ce que** l'arrangement d'étalonnage possède une section de mesure de référence (101-1) et une section de mesure de contrôle (101-2) pour un débitmètre (125) à étalonner, comprenant des moyens (112, 130) destinés à régler des conditions de pression et d'écoulement au moins approximativement identiques et constantes pour le milieu fluide dans les deux sections de mesure, comprenant des moyens (115, 116, 125) destinés à acquérir un débit de référence du milieu fluide à travers la section de mesure de référence (101-1) et des valeurs de débit correspondant à celui-ci dans le temps à travers la section de mesure de contrôle (101-2) à une température de milieu préréglée, comprenant des moyens (195, 198) destinés à comparer le débit de référence acquis à travers la section de mesure de référence (101-1) aux valeurs de débit correspondant à celui-ci dans le temps du débitmètre (125) à étalonner afin de déterminer, en se basant sur cette comparaison, au moins une valeur de correction pour l'étalonnage du débitmètre (125) à la température de milieu préréglée, comprenant des moyens (195, 198) destinés à déterminer la valeur de correction respective pour le débitmètre (125) pour différentes températures de fluide du milieu fluide afin de déterminer une fonction d'étalonnage à l'aide des valeurs de correction dépendantes de la température en tant que point de référence, et comprenant des moyens (104, 155) destinés à refouler de manière permutable le milieu fluide (102) depuis un réservoir (103) ou depuis un contenant de circuit fermé (152) réalisé sous la forme d'une cuve fermée vers la section de mesure de référence (101-1) et la section de mesure de contrôle (101-2), la permutation sur le contenant de circuit fermé (152) s'effectuant pour des raisons de sécurité lorsque les sections de mesure (101-1, 101-2) fonctionnent à des températures élevées.

9. Arrangement d'étalonnage selon la revendication 8, **caractérisé en ce que** la section de mesure de contrôle (101-2) est disposée en aval de la section de mesure de référence (101-1) dans le sens d'écoulement du milieu (102) fluide.

10. Arrangement d'étalonnage selon la revendication 8 ou 9, **caractérisé en ce que** des moyens (118, 118') destinés à échauffer le milieu (102) fluide sont disposés dans le sens d'écoulement entre la section de mesure de référence (101-1) et la section de mesure de contrôle (101-2) en aval.

11. Arrangement d'étalonnage selon la revendication 10, **caractérisé en ce que** les moyens (118, 118') destinés à échauffer le milieu fluide possèdent au moins un échangeur de chaleur (118) et un thermorégulateur (118') associé.

12. Arrangement d'étalonnage selon les revendications 8 à 11, **caractérisé en ce que** des moyens (109-2, 109-4, 132, 134, 135, 140 - 143) destinés à peser le débit quantitatif du milieu fluide qui est passé à travers la section de mesure de référence (101-1) et la section de mesure de contrôle (101-2) pendant une série de mesures se trouvent en aval de la section de mesure de contrôle (101-2).

13. Arrangement d'étalonnage selon la revendication 12, **caractérisé en ce que** les moyens de pesage comprennent un contenant de pesage (140) destiné à accueillir le fluide (102) sortant de la section de mesure de contrôle (101-2), le contenant de pesage (140) pouvant être connecté fluidiquement à une sortie de la section de mesure de contrôle (101-2) par le biais d'au moins une conduite (101, 109-2, 109-4) et le contenant de pesage (140) possédant au moins une cellule de pesage (142) qui sert au pesage du milieu accueilli dans le contenant de pesage (140).

14. Arrangement d'étalonnage selon la revendication 12 ou 13, **caractérisé en ce qu'**au moins une vanne de commutation (135) est présente, laquelle se trouve en aval du côté évacuation de la sortie de la section de mesure de contrôle (101-2) afin de, dans une première position de commutation de vanne, conduire le milieu sortant de la section de mesure de contrôle (101-2) dans le contenant de pesage (140) et, dans une deuxième position de commutation de vanne, renvoyer le milieu (102) dans un réservoir (103).

15. Arrangement d'étalonnage selon l'une des revendications 8 à 14, **caractérisé en ce que** pour l'insertion et/ou le remplacement d'un débitmètre (125), au moins une vanne de commutation (119) est disposée entre la section de mesure de référence (101-1) et la section de mesure de contrôle (101-2), laquelle, dans une première position de commutation de vanne, relie fluidiquement la section de mesure de référence (101-1) à la section de mesure de contrôle (101-2) et, dans une deuxième position de commutation de vanne, sépare fluidiquement la section de mesure de référence (101-1) de la section de mesure de contrôle (101-2).

16. Arrangement d'étalonnage selon l'une des revendications précédentes 8 à 15, **caractérisé en ce que** des capteurs (110, 111, 113, 117 ; 119' ; 120, 121, 123, 127) sont respectivement disposés dans la section de mesure de référence (101-1) et la section de mesure de contrôle (101-2) afin d'acquérir des grandeurs de mesure physiques du milieu (102) fluide, au moins à l'aide de la pression, de la température et de la viscosité.

**17.** Arrangement d'étalonnage selon l'une des revendications précédentes 8 à 16, **caractérisé en ce qu'**un réservoir (103) destiné à accueillir le milieu (102) fluide et au moins une pompe (104) sont présents, l'au moins une pompe (104) refoulant le milieu (102) fluide à travers la section de mesure de référence (101-1) et la section de mesure de contrôle (101-2), disposée en aval dans le sens de l'écoulement, pendant le régime d'étalonnage.

**18.** Arrangement d'étalonnage selon l'une des revendications précédentes 8 à 17, **caractérisé en ce qu'**un redresseur d'écoulement (112, 122) est présent aussi bien dans la section de mesure de référence (101-1) que dans la section de mesure de contrôle (101-2).

**19.** Arrangement d'étalonnage selon l'une des revendications 8 à 11, **caractérisé en ce qu'**au moins deux débitmètres (115, 116) sont disposés l'un derrière l'autre dans le sens de l'écoulement dans la section de mesure de référence (101-1).

**20.** Arrangement d'étalonnage selon l'une des revendications précédentes 8 à 19, **caractérisé en ce que** la section de mesure de référence (101-1) possède un piston de travail (165) accueilli de manière coulissante dans un cylindre (166), lequel sert à générer un débit volumique régulier constant du milieu (102) fluide dans la section de mesure de référence (101-1) lors de l'exécution de son excursion de travail.

**21.** Arrangement d'étalonnage selon l'une des revendications précédentes 8 à 20, **caractérisé en ce que** la section de mesure de référence (101-2) est réalisée sous la forme d'un sous-ensemble (197) mobile qui est pourvu d'un étalonnage à l'aide d'au moins un jeu de données d'étalonnage (193, 194, 199), l'au moins un jeu de données d'étalonnage (193, 194, 199) fournissant au moins une valeur de correction pour la fonction de référence du sous-ensemble (197).

Fig. 1

Fig. 2

# Fig. 3

169-0 169-1 169-2 169-3 169-4 169-5 169-6 169-7

164

165

165'' $d_S$ $d_K$ 165' 166

h

EP 3 152 533 B1

# Fig. 4

# Fig. 5

**Fig. 6**

**Fig. 7**

**Fig. 8**

# Fig. 9

EP 3 152 533 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008008427 B3